(19) Europäisches Patentamt
European Patent Office
Office européen des brevets

(11) **EP 3 017 696 B1**

(12) **EUROPEAN PATENT SPECIFICATION**

(45) Date of publication and mention
of the grant of the patent:
**01.08.2018 Bulletin 2018/31**

(51) Int Cl.:
***A01K 61/00*** *(2017.01)*    ***A01K 63/04*** *(2006.01)*
***A01K 61/13*** *(2017.01)*

(21) Application number: **15790808.8**

(22) Date of filing: **31.03.2015**

(86) International application number:
**PCT/KR2015/003159**

(87) International publication number:
**WO 2016/017896 (04.02.2016 Gazette 2016/05)**

(54) **METHOD OF PRODUCING STERILE AQUACULTURE WATER, AND METHOD USING SAME OF FISH AQUACULTURE USING FLOWING STERILE WATER**

VERFAHREN ZUR HERSTELLUNG VON STERILEM AQUAKULTURWASSER UND VERFAHREN ZUR VERWENDUNG DAVON IN EINER FISCHAQUAKULTUR MIT FLIESSENDEM STERILEM WASSER

PROCÉDÉ DE PRODUCTION D'EAU STÉRILE D'ÉLEVAGE, ET PROCÉDÉ D'UTILISATION DE LADITE EAU D'ÉLEVAGE DE POISSONS À L'AIDE D'EAU STÉRILE S'ÉCOULANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2014   KR 20140098350**
**02.02.2015   KR 20150016084**

(43) Date of publication of application:
**11.05.2016   Bulletin 2016/19**

(73) Proprietors:
• **Daebong LS, Ltd.**
**Incheon 405-820 (KR)**
• **Daebong Live Feed Fishery Association Corp.**
**Seogwipo-si, Jeju-do 699-915 (KR)**

(72) Inventors:
• **PARK, Jong Ho**
**Seoul 150-793 (KR)**
• **SONG, Ki Cheon**
**Jeju-si**
**Jeju-do 690-779 (KR)**
• **HAN, Jung Kyun**
**Jeju-si, Jeju-do 63229 (KR)**

• **KIM, Yong Gil**
**Bucheon-si**
**Gyeonggi-do 420-812 (KR)**
• **KIM, Gyeong Ju**
**Jeju-si**
**Jeju-do 690-818 (KR)**
• **KIM, Hong Gyun**
**Seogwipo-si, Jeju-do 63629 (KR)**
• **PARK, Se Hyun**
**Seoul 135-838 (KR)**
• **PARK, Se In**
**Seoul 135-838 (KR)**

(74) Representative: **Viering, Jentschura & Partner mbB**
**Patent- und Rechtsanwälte**
**Am Brauhaus 8**
**01099 Dresden (DE)**

(56) References cited:
JP-A- H07 214 081    JP-A- 2003 190 954
JP-A- 2003 275 770    JP-A- 2006 320 832
JP-A- 2014 046 266    KR-A- 19990 064 389

## Description

### Technical Field

The present invention relates to a method for manufacturing sterile farming water and to a flowing water-type sterile water aquaculture method, and more particularly, to a new flowing water-type sterile water aquaculture method to which a new-concept, sterile aquaculture system (SAS), is applied, wherein oxidant is generated through the electrolysis treatment, etc., of freshwater or seawater aquaculture; pathogenic viruses, germs, and parasites are sterilized such that harmful ingredients are reduced below the drinking water criteria; the treated water is neutralized for removing fish-harming residual oxidant; and the fish mortality ratio due to various pathogenic microorganisms is minimized by using the treated water for aquaculture without using antibiotics or vaccines.

### Background technology

The culture method of fish includes cage type which sets up the mesh with a certain size in river or sea, pond type which uses pond and reservoir, inland type that farms fish by exchanging new water several times per a day pumping fresh water or sea water into inland tanks, RAS (Recirculation Aquaculture System) that supplies the filtered water into tank again after filtering water in the tank with drum filter and biofilter with about 10% daily new water exchange ratio, Biofloc type that autotrophic uses them by multiplying and discomposing bacteria and heterotrophic bacteria simultaneously on the metabolite that farmed fish secretes and residual feed.

In the meantime, the rapid eutrophication has been proceeding due to all kinds of the contaminant flowed into sea. Therefore, all kinds of viruses, pathogenic bacteria and parasites are being spread widely so that condition of offshore aquaculture becomes worse and worse. It leads to continuous increase of farmed fish mortality. To varying degrees of statistics, mortality ratio by number is more than 50% and more than 40% by weight from fry to market size so that distress of fish farmers from it is indescribable.

To solve this, the developed model is above-described "RAS" and "Biofloc" that farms fish only in the clean artificial seawater completely blocked from polluted seawater. However, they are a possible method to the fish like tilapia, eel, carp, salmon and shrimp that is not sensitive to ammonia nitrogen, nitrite nitrogen and parasites but not suitable one to the fish growing well in clean sea area because it's a high risk of contamination, high cost of construction and maintenance. In addition, due to low new water exchange ratio, it becomes good condition to protozoan so that high risk of mass mortality always resides.

Therefore, from 20 ~ 30 years ago, the research has been done actively on the way to use the water as farming water after removing oxidant with activated carbon (e.g. - Cabot corporation Norit GCN 830) after eliminating virus, bacteria and parasites in the water by generating oxidant via treating fresh water or sea water with ozone or electrolysis (Korea patent registration No. 10-1264260). However, it has not commercialized in the farm requiring a lot of water(in case of small-medium size farm with 5,000m$^2$ water surface, it requires about 60MT/Min) but it's just used for drinking water(like coke) production in food industry.

And also, there are several kinds of salts of Sodium Chloride (NaCl) and Sodium Bromide (NaBr) in farming water(seawater and fresh water). In case of electrolyzing these farmed water, several kinds of oxidant materials (Total Residual Oxidant, TRO) are being generated. For example, as described in reaction formula 1, there could be several electrolysis reactions.

[Reaction formula 1]     $NaCl \rightarrow Na^+ + Cl^-$ $2Cl \rightarrow Cl_2 + 2e^-$ $Cl_2 + H_2O \rightarrow HCl + HOCl$ $HOCl \rightarrow H^+ + OCl^-$ $H_2O \rightarrow H^+ + OH^-$ $Na^+ + OH \rightarrow NaOH$ $Cl_2 + 2NaOH \rightarrow NaOCl + NaCl + H_2O$ $HOCl + Br \rightarrow HOBr + Cl^-$ $HOBr \rightarrow H+ + OBr^-$

In addition, when dissolving ozone in seawater and freshwater with ozone generator or ozone dissolver, all kinds of oxidant materials could be obtained as described in reaction formula 2.

[Reaction formula 2]     $Dissolved\ O_3 \rightarrow -O_2 + O$ $NaBr + O_3 \rightarrow -NaOBr + O_2$ $NaCl + O_3 \rightarrow -NaOCl + O_2$ $NH_3 + HOBr \rightarrow NH_2Br + H_2O$ $NH_2Br + HOBr \rightarrow NHBr_2 + H_2O$ $NHBr_2 + HOBr \rightarrow NBr_3 + H_2O$

Regarding oxidant materials produced by electrolysis and ozone generator in fresh water or sea water, lots of reference says that concentration of it, more than 0.8ppm(0.8mg/L) is enough and the required time of it, more than one minute is sufficient for eliminating pathogenic virus, bacteria and parasites.[SUISANZOSHOKU, 44(4), 457 - 463(1996) & 49(2), 237 - 241(2001); Nippon Suisan Gakkaishi, 67(2), 222 - 225(2001)]. Also, oxidant generated by ozone is neutralized with sodium sulfite and sodium thiosulfate but this method is possible for small-sized farm or farm run by batch but it is known impossible for flowing-water(continuous) system because of difficulty of neutralization.(13.2 basic knowledge of sea water ozone treatment, new technology of ozone usage, published by Sanyu Shobou, Japan P593).

In addition, in the Korea Patent Open No.2004-19772, to produce fish diseases pathogenic bacteria sanitizing solution containing diluted solution of acid water and alkaline water each obtained from sea water electrolysis and neutralization method by mixing this solution together with stoichiometric volumetric ratio after using this solution is proposed. However, it's just for sanitizing solution for sterilizing fish diseases in the farming water not a technology applying to flowing water system to treat it continuously.

In the Korea Patent Publication No. 2010-59089, it's about treatment method on sea water sterilization. A device of sterilization processing passing a stage of sterilization treatment with electrolysis and potential difference of sea water and a stage of processing to pass the treated sea water with chlorine dioxide processor through and a technology to neutralize it with hydrogen peroxide is proposed. However, this invention is not to be specially discussed on process of chlorine dioxide that is toxic to fish and fish toxicity according to oxidant's concentration and was trying to apply to outdoor shrimp farm. In measuring total residual oxidant (TRO), a chemical analysis method that is possible to analyze TRO over 0.5mg/L (0.5ppm) was used so that the technology is considered not to remove oxidant below 0.5ppm. Because it can't remove oxidant less than 0.06ppm, minimum concentration that could farm fish, it cannot apply to aquaculture at all. In particular, it can't be applied to flowing-water system as it takes longer time to neutralize even though hydrogen peroxide used for neutralization process is applied with other ancillary neutralization means.

In Korea Patent Registration No.10-1064911, an emission technology that neutralizes ballast water and stores it at ballast water tank for certain time after sterilizing the water by electrolyzing sea water is proposed but it's just a technique to eliminate microorganism from ballast water can't be suitable to farming water. Especially, in case of emitting ballast water, the process neutralizes to the maximum line living organism can live, not kill it so that it can't be regarded as sterilized water so that it can't be applied to fish.

Document JP 2003 190954 A discloses a method for sterilizing seawater capable of providing safe and sterilized seawater by using an electrolytic apparatus and a simple and compact apparatus therefor. And, document JP 2003 275770 A discloses a seawater pasteurizer characterized in which the bromic acid ions are generated in the seawater by electrolyzing the seawater made acidic and thereafter the pasteurization of the seawater can be performed by the powerful pasteurization effect thereof.

Meanwhile, In order to eliminate parasites like scuticocilate, bacteria and all kinds of virus causing fish diseases, they are more than 99.9% killed under more than 0.8ppm oxidant concentration and it's reported that sterilization effect is similar if it's treated under 0.5ppm for five minutes.

In stability of fish on oxidant, it's introduced that a red seabream is killed within 50 minutes under 0.03ppm TRO(Total Residual Oxidant), a black seabream only 10 minutes under 0.04ppm TRO and TRO LC50(the concentration that 50% fish is died) of rainbow trout is 0.008ppm. It's warning that TRO is very dangerous to fish. In case of flounder, the most popular and farmed species in Korea, it's said that it's toxic at 0.01~0.04ppm (mg/L). In order to farm fish safely, it's described that TRO should be maintained under 0.003ppm (mg/L)[SUISANZOSHOKU, 44(4), 457 - 463(1996)].

Therefore, pathogenic virus can be eliminated completely under TRO 0.8ppm produced by electrolysis or ozone generator at lower concentration for a short time but it can't be used for farming water because of high toxicity to fish. The reason is as in that the removal technology on the residual oxidant after sterilization has not substantialized properly yet.

Regarding these kinds of elimination technique, known activated carbon filter has not industrialized because it requires tremendous treatment capacity and area to get rid of above-mentioned oxidants by less than 0.003ppm which fish lives enough. However, food industry and small-scaled hatchery has been using it by removing oxidant by 0.01ppm.

With regard to this, the Korean Journal of Fisheries and Aquatic Sciences, 46(5), pp. 534-539 (2013), concluded that short-time treatment of live fish and shellfish with an oxidant concentration of 0.07-0.09 ppm (mg/L) resulted in no detection of vibrio bacteria in the gills after 12 hr, in the skin after 24 hr, and in the intestines after 36 hr of the treatment, and no death of the specimen after 1 week of exposure, which implied that such treatment may be utilized for live-fish stores to sterilize vibrio bacteria, etc., before selling fish to consumers. However, such treatment has not been practically used because it was definitely impossible to supply farming water to fish farms for a long time, and because fish and shellfish sometimes died in treated farming water.

Therefore, the reality is that, in the existing aquaculture methods, flowing-water aquaculture methods, wherein sterile farming water is continuously supplied, are not used, and that various antibiotics or vaccines are used inevitably, or, in worse cases, aquaculture is operated by taking the risk of fish mortality ratio at 40%-50%. At best, efforts are made to reduce the mortality ratio by means of recirculation aquatic systems (RAS) or depending on the types of fish. Accordingly, it is desperately needed for the aquaculture industry to develop a new efficient and cost-effective aquaculture system.

Meanwhile, an argument is being raised that, in the sterilization of freshwater or seawater with an electrolyzer or an ozone supplier for manufacturing sterile farming water for aquaculture, total residual oxidants (TRO) having the radicals of $O_2$, $Cl_2$, Br2, $O_3$, and OH are first generated at the anode by the NaCl and NaBr that exist in freshwater or seawater; the TRO secondarily generates NaOCl, $ClO_2$, NaOBr, HOCl, HOBr, etc.; the chemicals react with the various organic substances existing in freshwater or seawater, and generate THMs, HAAs, HANs, etc.; CO is created while the OH radical is momentarily generated and destroyed; and $BrO_{3-9}$ (bromate) is generated after ozone is generated at a potential above the ozone oxidation reduction potential (ORP), or when overcurrent or overvoltage is generated at the electrolyzer.

In addition, although it is possible to manufacture farming water that does not contain pathogenic microorganisms by sterilizing farming water through the electrolysis method, technologies for reducing oxidants to a level that is safe for fish and methods for manufacturing sterile farming water that contains byproduct substances, which are harmful for humans and fish, at a level below the drinking water criteria are not commercialized for aquaculture because of high costs. Only a technology of sterilization of ballast water, whereby the ballast water of ships is sterilized and discharged to the sea within the criteria approved by the International Maritime Organization (IMO), is being utilized such that sterilized ballast water is rapidly diluted into a large volume of seawater to avoid damages to fish living in the sea.

Like this, aquaculture methods using farming water sterilized by means of electrolysis have not been practically commercialized until now. It is because only a known method is to sterilize farming water by means of electrolysis, and then to remove TRO substances using activated carbon. However, such method is only being utilized in small-sized seedling farms or in research facilities by virtue of its manufacturing method.

[Advanced technology literature]

[Patent literature]

(Patent literature 1) 1. Korea Patent Registration No. 1264260
(Patent literature 2) 2. Korea Patent Registration No. 2004-19772
(Patent literature 3) 3. Korea Patent Registration No. 2010-59089

[No-patent literature]

(No-patent literature. 1) 1. SUISANZOSHOKU, 49(2), 237 ~ 241(2001)
(No-patent literature. 2) 2. Nippon Suisan Gakkaishi, 67(2), 222 ~ 225(2001)
(No-patent literature. 3) 3. SUISANZOSHOKU, 44(4), 457 ~ 463(1996 - H8)
(No-patent literature. 4) 4. Fisheries and Aquatic Science bulletin, 46(5), 534 ~ 539(2013)

## Summary of Invention

### Technical assignment

The task of the present invention is to develop a method for sterile farming water that contains a concentration of harmful substances below the drinking water criteria by utilizing oxidants that are generated by means of ozone or electrolysis. This method for treating farming water can minimize fish mortality ratio due to various pathogenic microorganisms without using antibiotics or vaccines in a system that supplies farming water for fish.

Another task is to provide a new aquaculture method and a system that continuously supplies flowing water-type harmless sterile farming water in a highly efficient and cost-effective manner, in comparison with the existing recirculation aquatic systems (RAS) or biofloc systems.

The present inventors have completed the present invention by finding out that it is possible to apply flowing water-type sterile farming water, which is safe for fish, to aquaculture systems after sterilizing fish-harming germs by using oxidants generated in farming water and by removing the oxidants thereof by means of a specific neutralization method such that the concentration of the remaining oxidants after neutralization becomes 0.06 ppm (mg/L) or less; 0.01 ppm, preferably; or 0.003 ppm, more preferably.

Accordingly, the purpose of the present invention is to provide a method for manufacturing sterile farming water, in which farming water is sterilized through the electrolysis method.

Another purpose of the present invention is to provide a method for supplying flowing water-type farming water that is safe for fish by sterilizing it with oxidants and then removing the oxidants using a neutralizer.

Still another purpose of the present invention is to provide a new flowing water-type sterile water aquaculture method that enables large-scale aquaculture by treating farming water in a very efficient, cost-effective, and eco-friendly manner.

The other purpose of the present invention is to provide a new flowing water-type sterile aquaculture system (SAS).

**Solutions to this assignment**

The present invention provides a flowing water-type sterile water aquaculture method comprising the following steps:

> (a) a farming water supply step for collecting freshwater or seawater and supplying it as farming water;
> (b) an oxidant generation step for generating oxidants in the supplied farming water through the electrolysis method, in which titanium or niobium is used as the substrate metal; freshwater or seawater is electrolyzed by an anode that is coated to have a thickness of 0.1-30 $\mu$m with ruthenium, iridium, tantalum, platinum, or the oxidant thereof; and a voltage between 2.51 and 4.4 V is applied to the electrolysis method such that bromate is generated with a concentration of 10 ppb or less;
> (c) a sterilization step in which oxidants remain in the continuously flowing farming water and sterilize fish-harming germs in the farming water;
> (d) a neutralization step in which a neutralizer is input in the sterilized and continuously flowing farming water, and the residual oxidants are reduced such that the concentration of residual oxidants in farming water becomes 0.06 ppm or less;
> (e) a sterile farming water supply step for supplying the sterilized and neutralized farming water to a fish farming water tank; and
> (f) an aquaculture wastewater discharge step for discharging wastewater from the fish farming water tank

wherein steps (c) and (d) are carried out in two to eight compartmented chambers, whereas the farming water is led or pumped in the compartmented chambers, flows in one direction, and sequentially undergoes the sterilization step (c) and the neutralization step (d) in the compartmented chambers, and wherein the chambers has a structure in which farming water flows continuously up and down through alternately placed partition walls, wherein the lower part of a partition wall is open in a given height and the upper part of the next partition wall is lowered in a given height, and such placement is repeated for a few times, such that the farming water flows over the upper part of a partition wall to the lower part of the next partition wall, flows through the lower part of the partition wall to the upper part of the next partition wall, and flows over the upper part of the partition wall to the lower part of the next partition wall.

In addition, the present invention provides a flowing water-type sterile water aquaculture system composed of the following:

> (a) a farming water supply part that collects freshwater or seawater and supplies it as farming water;
> (b) an oxidant generation part that generates oxidants in the supplied farming water through the electrolysis method, in which titanium or niobium is used as the substrate metal; freshwater or seawater is electrolyzed by an anode that is coated to have a thickness of 0.1-30 $\mu$m with ruthenium, iridium, tantalum, platinum, or the oxidant thereof; and a voltage between 2.51 and 4.4 V is applied to the electrolysis method such that bromate is generated with a concentration of 10 ppb or less;
> (c) a sterilization part, which includes farming water flow chambers that lets the oxidants remain in the farming water, whereas the farming water containing the oxidants is supplied and moved, and sterilize fish-harming germs in the farming water;
> (d) a neutralization part composed of a neutralizer input part, wherein a neutralizer is input while the sterilized farming water flows, and farming water flow chambers, wherein the residual oxidants in the farming water are neutralized to a concentration of 0.06 ppm or less, whereas the farming water in which one or more neutralizers selected from thiosulfate inorganic bases, sodium dithionite, ascorbic acid, sodium ascorbic acid, cysteine, sulfite gas, sodium sulfite, sodium meta-bisulfite, potassium meta-bisulfite, acid sodium sulfite, and peroxide are input continuously during moving;
> (e) a sterile farming water supply part that supplies the sterilized and neutralized farming water to a fish farming water tank; and
> (f) an aquaculture wastewater discharge part that discharges aquaculture wastewater from the fish farming water tank.

**Effects of the invention**

The effects of the present invention are that farming water is sterilized in a low-cost effective manner by means of electrolysis under a certain condition and that it enables the continuous sterilization of farming water by enabling the efficient sterilization of farming water by removing the harmfulness of oxidants through a neutralization method, wherein the neutralizer itself is safe for fish, as well as the substances generated after neutralization.

In other words, the described technology has a high possibility for commercialization because it can radically decrease the fish mortality ratio by killing various pathogenic microorganisms in farming water, almost completely removing fish-harming residual oxidants to a level of 0.06 ppm or less; 0.01 ppm, preferably; and 0.003 ppm, more preferably, and continuously supplying sterilized farming water to a fish farming water tank.

The aquaculture method and the sterile aquaculture system can make cultured fish become healthy foodstuff because they can enable the mass production of cultured fish in a method that does not feed fish with antibiotics. In addition, they can greatly contribute to the income growth of the aquaculture industry by expanding the consumption of cultured fish, and they are expected to open a new era of aquaculture industry by enabling the cost-effective and eco-friendly aquaculture of fish without being affected by natural disasters, such as typhoons, and the proliferation of pathogenic microorganisms.

In particular, because the conditions of the electrolysis method can manufacture sterile farming water through operation in a certain voltage range, human-harming substances, such as bromate, can be minimized, and it will be possible to adopt aquaculture systems that are safer to the human body and are barely fatal.

## Brief description of the drawing

Figure 1 is an exemplary process diagram of the flowing water-type sterile aquaculture method according to the current invention.

Figure 2 is a schematic view of an example of the typical sterile aquaculture system, which is composed of a sterilization part and a neutralization part structured with multiple chambers, as an embodiment of the flowing water-type sterile aquaculture system.

Figures 3a and 3b are exemplary views of a specific embodiment of the structure of the sterilization part and the neutralization part, which are the major parts of the sterile aquaculture system according to the present invention, wherein Figure 3a is a diagrammatical view of the eight chambers comprising the sterilization part and the neutralization part, with the arrows illustrating the path of the farming water flowing through the chambers, and Figure 3b is a diagrammatical view of the plane structure of the eight chambers constituting the sterilization part and the neutralization part.

## Detailed description of the preferred embodiment

Hereinafter, an embodiment of the present invention will be described in detail.

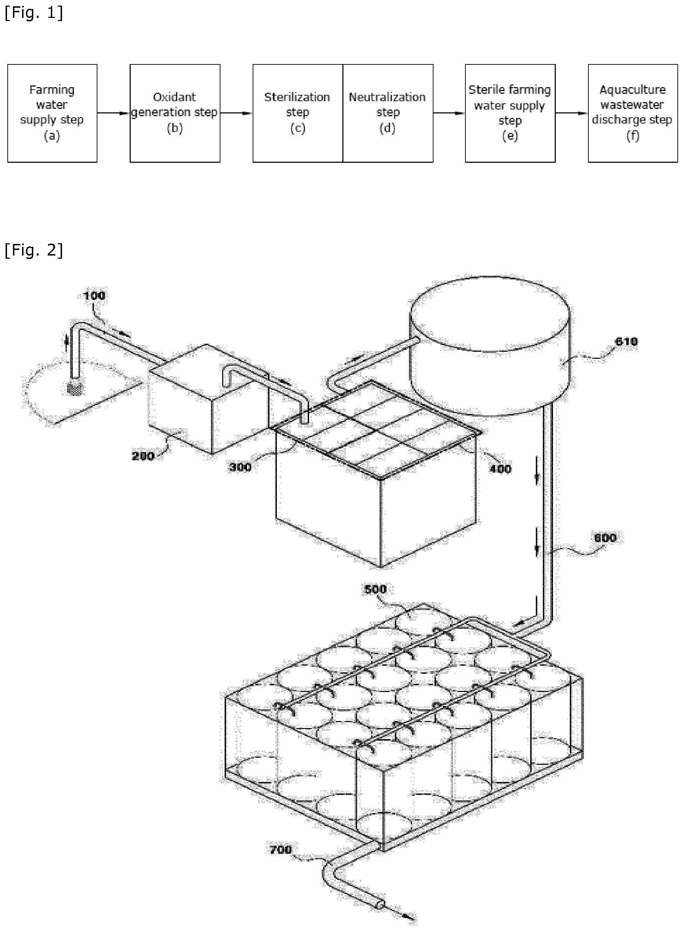

The present invention relates to a flowing water-type sterile water aquaculture method to which a new-concept, sterile aquaculture system (SAS), is applied, wherein a large volume of farming water is continuously supplied, sterilized, and neutralized, and the entire volume of the supplied farming water is continuously discharged after being utilized in a fish farming water tank. The flowing water-type aquaculture method according to the present invention will be essentially applicable to sterile aquaculture systems and can be described by the process diagram illustrated in Figure 1.

The present invention relates to a flowing water-type sterile water aquaculture method, wherein a farming water supply step, an oxidant generation step, a sterilization step, a neutralization step, a sterile farming water supply step, and a farming water discharge step can be structured in a continuous manner.

In the present invention, the farming water supply step (a) is for collecting freshwater or seawater and for supplying it as farming water.

Step (a) is for continuously collecting freshwater from a location that can supply freshwater continuously or seawater from an area of a sea that can supply seawater continuously, then for supplying the freshwater or seawater as farming water by means of pumping or natural flow. According to the preferred embodiment of the present invention, farming water can be collected from a lake, a sea, etc., by means of long pipes and a pump, etc. As farming water thus collected contains various fish-harming germs, if it is used as farming water as it is, it will cause a cultured-fish mortality ratio of 40%-50%. Accordingly, the collected initial farming water is sent to the next step, which is the oxidant generation step (b), wherein the sterilization environment is furnished for sterilizing various fish-harming germs contained in the initial farming water.

Step (b) is for generating oxidants in the supplied farming water, wherein oxidants are generated in the farming water by means of electrolysis.

In the present invention, oxidants generally refer to substances that can kill pathogenic microorganisms such as virus, germs, and parasites. According to the present invention, examples of oxidants are $NaOBr$, $NaOCl$, $NaClO_2$, $HOCl$, $HClO_2$, $HOBr$, $Cl_2$, $Br_2$, OH radical, $O_3$, $NH_2Br$, $NHBr_2$, and $NBr_3$. Meanwhile, electrolysis of farming water composed of freshwater or seawater will create 5-20 types of sterilizing substances depending on the quality of the initial farming water, and several of the substances will be oxidizing substances. Accordingly, the present invention generally refers to such sterilizing substances as oxidants.

Therefore, the oxidants generated in such farming water cannot be simply concluded to be typical oxidants but can be referred to as highly active and unsafe sterilizing substances, a large quantity thereof will disappear when they are exposed to the atmosphere for a long period, and which cannot be completely separated or quantified.

According to the present invention, the farming water uses the total residual oxidants (TRO) that are generated by means of electrolysis.

The present invention relates to implementation of electrolysis under specific conditions in applying the electrolysis method for generating the oxidants. In the present invention, it is highly important to manufacture sterile water through the electrolysis method.

The method for manufacturing sterile water through the electrolysis method according to the present invention can be specifically described as follows:

In general, sterile farming water for aquaculture can be manufactured by generating oxidants by means of electrolysis and sterilizing farming water with the oxidants. In regard of this, an experimental research was reported in Aquaculture 264, 119-129 (2007). With regard to a method for generating a small quantity of THMs, HANs, HAAs, bromate, CO, etc., which are known to be harmful substances that are carcinogenic to humans and fish, the research concluded that an electrolysis of farming water at a flow rate of 2 L/min and at 1.8-2.5 V can create a TRO of 0.5-3.0 ppm (mg/L), and the TRO can sufficiently sterilize the farming water and can sufficiently reduce THMs, HANs, HAAs, etc., to a level below the drinking water criteria. However, it did not report that the said process generated bromate, which is known to be carcinogenic to humans, at a level below the drinking water criteria.

The sterile water manufacturing method according to the present invention is a method for manufacturing sterile water that contains harmful substances including bromate at a level below the drinking water criteria.

THMs (Trihalomethane) contained in sterilized water done by electrolysis is known as Trichloromethane, Dichlorobromomethane, Dibromochloro-methane, Tribromomethane, 1,2,3-Trichloropropane, 1,2-dichloroethane and so on. In HANs (Halogennated acetonitriles), it consists of Monochloroacetonitrile, Monobromoacetonitrile, Trichloroacetonitrile, Dichloroacetonitrile, Bromochloroacetonitrile, Dibromoacetonitrile, Tribromoacetonitrile, Bromodichloroacetonitrile, Dibromochloroacetonitrile and so on.
In HAAs(Halogenated acetic acid), It contains Monochloroacetic acid, Monobromoacetic acid, Dichloroacetic acid, Dalapon, Trichloroaceticacid, Bromochloroacetic acid, Dibromoacetic acid, Bromodichloroacetic acid, Chlorodibromoacetic acid, Tribromoacetic acid and chloropicrin as other substance.

Meanwhile, with regard to a technology for generating a small quantity of THMs, HAAs, and HANs when freshwater or seawater is sterilized by means of electrolysis, the Journal of Environmental Protection 1, pp. 456-465 (2010), reported that the concentration of trichloromethane (chloroform), bromodichloromethane, dibromochloromethane, and tribromomethane (bromoform) among THMs varied over time when the concentration of the residual chlorine of NaOCl, which is an oxidant that is generated when seawater is treated by means of electrolysis, is regulated to be 1-4 ppm. Moreover, according to the Journal of the Korean Society for Marine Environment and Energy 16(2), pp. 88-101 (May 2013), the concentrations of various fish-harming substances in the sterilized ballast water that is discharged from ships are as shown in Table 1.

[Table 1]

| Ingredient Name | Generated concentration after electrolysis | Seawater before electrolysis | Drinking water standards(KR) |
|---|---|---|---|
| Bromate(ug/L) | 51.1 | - | 10 |
| THMs(ug/L) | | | |
| 1,2 -Dichloroethane | 0.36 | - | 20 |
| Dibromomethane | 0.23 | - | |
| Dichlorobromomethane | - | - | 30 |
| Dibromochloromethane | 1.12 | - | 100 |
| Trichloromethane | 2.08 | 1.74 | 80 |
| Tribromomethane | 42.2 | 0.28 | |

(continued)

| HAAs | | | |
|---|---|---|---|
| Monochloroacetic acid | 25.8 | 2.31 | |
| Dalapon | 0.67 | - | |
| Trichloroacetic acid | 2.82 | - | |
| Tribromoacetic acid | 6.37 | - | |
| Monobromoacetic acid | 1.17 | - | |
| Dibromoacetic acid | 9.26 | - | |
| HANs | | | |
| Dibromoacetonitrile | 12.7 | - | 100 |

The present invention has newly invented the conditions of an electrolysis method for manufacturing sterile farming water, wherein freshwater or seawater is flown into an electrolysis tank; the concentration of TRO is maintained at 0.1-7 ppm, which enables sterilization; and the problem of the excessive generation of bromate, which is indicated in Table 1, is solved.

According to the present invention, with regard to the electrolysis devices used for the sterilization of farming water, sterilization of farming water by means of applying electrolysis at a voltage of less than 2.5 V will generate less harmful substances; however, at a voltage of less than 2.5 V, the size of the electrolyzer will become significantly large for being commercialized and have low cost-effectiveness because of the density of the current flowing through the anode and cathode plates; moreover, it cannot sterilize TRO to have a concentration of 0.1-7 ppm or, more preferably, 0.5-3.0 ppm for a large quantity of water having a volume of 3,600 m$^3$/hr for a typical aquaculture area of 5,000 m$^2$.

Therefore, according to the present invention, farming water is sterilized by means of electrolysis at a voltage of 2.5-4.4 V and, more preferably, 3.0-4.2 V, depending on the concentration of sodium bromate (NaBr) in freshwater or seawater. The condition of electrolysis is to reduce the concentration of bromate at a level below the drinking water criteria and to minimize fish mortality ratio.

According to the present invention, the substances contained in the farming water made of seawater, which has been sterilized to have a TRO concentration of 1 ppm by means of electrolysis at 3.5 V, are as shown in the Table 2.

[Table 2]

| Ingredient Name | Farming water after electrolysis ($\mu$g/L) | Seawater before electrolysis ($\mu$g/L) | Drinking water standards(KR) ($\mu$g/L) |
|---|---|---|---|
| Total Trihalomethane ($\mu$g/L) | 23.7 | 2.02 | 100 |
| Trichloromethae (Chloroform) | nd | nd | 80 |
| Dichloroacetonitrile | 0.18 | nd | 90 |
| Trichloroacetonitrile | nd | nd | 4 |
| Total Haloacetic acid | 7.84 | nd | 100 |

According to the invention, freshwater or seawater is electrolyzed by using a cathode made of the substrate metal of titanium or niobium, and an anode on which a metal selected from ruthenium, iridium, tantalum, platinum, or the oxidant thereof is coated at a thickness of 0.1-30 $\mu$m.

According to the invention, the voltage of the electrolysis is set at 2.51-4.4 V, whereby the concentration of bromate can become less than 10 ppb. If the voltage of the electrolysis is less than 2.51 V, the concentration of the generated oxidants will become too small, which will decrease the sterilization effect, and will lead to low cost-effectiveness and no feasibility of commercialization; and if the voltage is more than 4.4 V, the concentration of bromate in the sterilized water will be over the level of the criteria, which is not preferred.

Therefore, the present invention includes a method for manufacturing sterile water by applying electrolysis under the said conditions such that bromate is generated at a concentration below the level of criteria.

According to the present invention, oxidant that is generated by ozone made by an ozone generator, etc., can be used, and sterile water can be manufactured by using the ozone.

In addition, the present invention relates to a flowing water-type aquaculture method that uses sterile water manufactured through the said electrolysis method.

According to the preferred embodiment of the present invention, it is preferable to generate oxidants in the oxidant generation step such that the concentration of the total residual oxidant (TRO) in the farming water becomes 0.1-7.0 ppm. The oxidant generation step creates an environment in which various fish-harming germs in the farming water are sterilized by the generated oxidants. If the TRO in the farming water is less than 0.1 ppm, it will be difficult to kill various pathogenic microorganisms, such as viruses, germs, parasites, etc., which are harmful for fish; if the TRO is over 7.0 ppm, significant costs will be required for the process of removing residual oxidants by means of neutralization, and various fish-harming substances (trihalomethane, halogenated acetonitrile, halogenated acetic acid, etc.) can be generated. Therefore, it is preferred to generate oxidants within the said range. The concentration of residual oxidants can be properly regulated within the said range in consideration of the quality of the farming water, the types of fish, and aquaculture conditions: a concentration of 0.1-7.0 ppm can be generated for the entire quantity of the collected farming water, or it is possible to create sterilization conditions by generating oxidants at a concentration of 1.0-700 ppm for the partial quantity of the collected farming water and by diluting the entire quantity of the collected farming water to have a concentration of oxidant at a level of 0.1-7.0 ppm.

Next, the farming water, wherein oxidant is generated, is sent to the sterilization step (c).

Step (c) is for sterilizing fish-harming germs in the farming water by letting the oxidant flows in the farming water. In this step, sterilization is carried out, wherein the oxidant comes into contact with each other or combines themselves with fish-harming germs in the farming water during the time that the farming water flows up or down the height between the sterilization tank and the ground. At this time, the farming water maintains water flow in which it continuously moves to the next step during the process of sterilization.

In the present invention, "fish-harming germs" refer to the entirety of various viruses, germs, parasites, pathogenic germs, and microorganisms that directly/indirectly cause the diseases of various types of fish including young and grown-up fish.

In general, methods for sterilizing farming water by radiating ultraviolet (UV) light to farming water before it is supplied into aquaculture tanks as a means of killing fish-harming germs were considered. However, for an aquaculture farm that replenishes new farming water 1-24 times a day, treating a huge quantity of farming water, namely, about 60 T per minute (3,600 T/hr) for a farming water tank having an area of 4,960 $m^2$, will be too uneconomical and will be difficult to be commercialized because it entails a lot of facilities and too much management costs. In addition, such method has a major disadvantage that the sterilization effect degrades significantly because UV light cannot be radiated into farming water when the farming water has a large quantity of floating matters or suspended matters. Therefore, such method cannot be used by most aquaculture farms, even if it can be used in small-sized aquaculture farms and some recirculation aquatic systems.

However, the sterilization step according to the present invention entails a small decrease in the sterilization effect caused by the suspended matters in farming water, as well as fewer facilities and lower maintenance costs than those of UV sterilization, because it adopts a mechanism for killing fish-harming germs by letting farming water contain sterilizing oxidants in the sterilization step, wherein the oxidants directly contact fish-harming germs. In particular, the sterilization step has an excellent effect of killing fish-harming germs because the residual oxidants in the farming water have sufficient sterile and insecticidal effects at a very low concentration of 0.5-1 ppm.

However, the residual oxidants for sterilizing fish-harming germs in the farming water not only kill fish-harming germs but also cause the death of cultured fish and shellfish. Therefore, it is impossible to use the farming water without removing the residual oxidants after the sterilization step. Accordingly, after the sterilization step, the residual oxidants must undergo the neutralization step before the sterile farming water is supplied to the aquaculture tank.

Meanwhile, according to the current convention, it is possible to measure the total residual oxidants (TRO) for measuring the proper level of residual oxidants in the sterilization step or the next step thereof. For measuring oxidants, generally known methods, namely chemical measuring methods and physical measuring methods, in which measurements are made by an instrument that uses a color reagent, such as N,N-diethyl-p-phenylenediamine (DPP), and o-tolidine, as well as electrodes, can be used.

According to an example of the chemical measuring method, 1 N of sulfuric acid is added to 50 mL of reagent such that the pH is adjusted to 6, and 5 mL of 1% KI solution is added. Then, drips of 1% starch solution are added thereto such that blue color appears. Next, if the blue color disappears with 0.001 N of sodium thiosulfate, then it is appropriate as the end point. The concentration of TRO is calculated using mathematical formula 1.

[Equation 1]

TRO (ppm=mg/L) = aF × 1000/X × 0.024(0.03456)

In this equation, ,
a: Adequate amount (ml)
F: 0.001N Sodium Thiosulfate solution Factor
X: Seawater sample(ml)
0.024: 0.001N Ozone(O3) quantity corresponding to Sodium thiosulfate solution.
0.03546: 0.001N Cl quantity corresponding to Sodium thiosulfate solution.
(If want to mark Cl2, multiplying it by 2)
is meant.

However, when the said chemical measuring method is used for measuring residual oxidants in the said measuring process, measurements are not easily achieved if the oxidant concentration is low, that is, below 0.5 ppm.

For the color-reagent measuring of the residual concentration of oxidants, a portable instrument, such as the HACH Pocket Colorimeter II, can be utilized. Such instrument is able to measure the residual concentration of oxidants when the oxidant concentration is 0.02 ppm or higher. Another method is to measure the total residual oxidants (TRO) generated by means of electrolysis and to multiply it with the conversion factor of 0.68 ($O_3$, 48 / $Cl_2$, 71).

Another example is a precision instrument, such as the ABB Limited AW400 residual chlorine monitor and the Siemens Mico2000, can be utilized. The sensitivity of such precision instruments is 0.001 ppm. As these instruments measure both the total residual chlorine oxidants and the total residual ozone, the summation of the measurement values can be understood as the value of TRO. However, they have the disadvantage that they display large errors for seawater.

Other methods for measuring the residual concentration of oxidants include ES05310.2a and IS07393-2 (1985), both of which specify the process test for drinking water with precision measurements of less than 0.005 ppm, and international standard test methods such as the OT method and the DPD method.

In the said sterilization step for removing fish-harming germs from farming water by utilizing residual oxidants in the farming water, the process is to make the farming water flow through chambers while it is smoothly being sterilized. At this time, the sterilization time in the sterilization step will be such that all the fish-harming germs in the farming water are killed, and the time may be determined depending on the condition of the farming water and the residual concentration of oxidants: it is preferably 1-32 min and, more preferably, 4-8 min. If sterilization is to be carried out for less than 1 min, the concentration of residual oxidants must be higher, wherein the removal of the high concentration of oxidants will require considerable costs, and the high concentration may cause a problem of generating various fish-harming substances (trihalomethane, halogenated acetonitrile, halogenated acetic acid, etc.). In addition, for sterilization for a long period, for example, 32 min or longer, the concentration of residual oxidants is set at a low level. However, it is not desirable because sterile and insecticidal effects are weak, even if the removal of oxidants is easier. A very long sterilization time may generate fish-harming substances and may be inefficient in terms of cost-effectiveness, as well as the time and space consumed for system operation.

In the farming water that has undergone the sterilization step, a process for removing the residual oxidant is needed, even if fish-harming germs are sterilized. Therefore, in the present invention, the sterilized farming water is sent to the neutralization step (d) for removing the residual oxidant.

The neutralization step (d) is for removing the residual oxidants by inputting neutralizers in the sterilized farming water, whereby virtually all or almost all the residual oxidants are removed such that the farming water has a quality that is very much appropriate as fish farming water.

According to the present invention, neutralizers are input in the neutralization step, and it is a low-cost and highly efficient method for removing the residual oxidants.

In general, for the existing method of using activated carbon for removing oxidants, farming water containing a concentration of oxidants at 0.1-7.0 ppm (mg/L) is supplied to aquaculture farms having a size of about 5,000 m$^2$ at a rate of 60 T/min, and a significantly large filter tank or a number of activated carbon-based filtering tanks are required for reducing oxidant to a level of 0.003 ppm or less, which is suitable for aquaculture. However, activated carbon-based methods have limitations that it is impossible to reduce the level of oxidants to 0.003 ppm instantly and that oxidant is reduced only to 0.01 ppm. Even if such methods can reduce the level of oxidants to 0.003 ppm when farming water undergoes a number of steps, or when the oxidant level before treatment is low at 0.01 ppm, they cannot be applied to aquaculture farms and can be applied in a very limited manner in small-sized seedling farms, the hygienic treatment of live shellfish, or in laboratories.

However, the present invention enables the removal of residual oxidants through the neutralization step with an appropriate neutralization method by utilizing a minimal quantity of neutralizers at a certain concentration or less that are safe for fish.

According to the preferred embodiment of the present invention, either aeration or a neutralization accelerant, or both of them, can be utilized in addition to the input of neutralizers. The preferred embodiment of the present invention can be broadly commercialized because the utilization of the said means can neutralize the oxidants in a low-cost and highly efficient manner such that the neutralization time or the level of oxidants is further reduced, and the concentration of the residual oxidants becomes 0.06 ppm or less; 0.01 ppm or less, preferably; or 0.003 ppm or less, more preferably.

According to the preferred embodiment of the present invention, the sterilization step (c) is preferably carried out for 1-28 min and, more preferably, for 4-12 min. The sterilization time in the sterilization step may be determined in consideration of the quality of the farming water and the initial residual concentration of the oxidant. The sterilization step refers to the time before the neutralization step is carried out, and the sterilization process may temporarily continue in the neutralization step by using the partial residual oxidant.

According to the preferred embodiment of the present invention, for inputting neutralizers in the neutralization step, it is preferable to input a quantity of the neutralizers such that the quantity of the neutralizers is a little larger than the ratio of the equivalent concentration of the residual oxidant in the farming water to the equivalent concentration of the neutralizers. Preferably, the neutralizers are input such that their equivalent concentration is two times or less than that of residual oxidant. It is because, if too much neutralizers are input, the neutralizers left without being utilized for neutralization may harm fish. Another reason is that it is needed to utilize a minimal quantity of neutralizers or post-neutralization substances within a limited concentration that is not at all harmful for fish.

Therefore, according to the preferred embodiment of the present invention, typical neutralizers, such as thiosulfate inorganic bases, can be utilized. More specifically, sodium thiosulfate and calcium thiosulfate can be utilized, or one or more chemicals selected from thiosulfate inorganic bases, sodium dithionite, ascorbic acid, sodium ascorbic acid, cysteine, sulfite gas, sodium sulfite, sodium meta-bisulfite, potassium meta-bisulfite, acid sodium sulfite, and peroxide can be utilized in the neutralization step. According to the present invention, the utilization of neutralizers other than the aforementioned typical neutralizers may lead to a very long neutralization time or to the difficulty in neutralizing residual oxidants to a level of 0.06 ppm or less or, more preferably, 0.01 ppm or less, without an additional neutralization process. In addition, lengthened neutralization time will be less cost-effective because a larger number of chambers, or more space and facilities are required for neutralization, or because a larger quantity of neutralizers are required, which will, in turn, lead to another problem of harmfulness because a larger quantity of neutralizers is left in the neutralized farming water after neutralization.

In the present invention, either the anhydride or hydrate of sodium thiosulfate, or sodium dithionite can be utilized. In addition, for the neutralizers, an aqueous solution can be made, and input in the sterilized farming water after the sterilization step is completed.

In the present invention, neutralizers refer to the substances used for removing the toxicity of the residual oxidant in the farming water. Therefore, it is needed to minimize the quantity of neutralizers used because the neutralizers are also toxic for fish. In other words, the neutralizers for oxidants should be safe for fish, as well as the substances generated after neutralization. In addition, because aquaculture wastewater, which is generated from farming water and discharged to rivers, seas, etc., should not impair environments, it should not affect the COD and BOD within the criteria of discharge water.

Therefore, according to the present invention, it is preferable to use the said neutralizers and to minimize their quantity. According to the preferred embodiment of the present invention, it is needed to input the quantity of the neutralizers such that the concentration of the neutralizers is larger than the equivalent-to-equivalent concentration of the residual oxidants and the neutralizers. Preferably, the neutralizers need to be input such that their equivalent concentration is two times or less than that of the residual oxidants. The neutralization step converts the oxidants to neutral salts that do not harm fish, such that sterile farming water can be manufactured, in which all or most of the oxidants are removed, and the residual concentration of the neutralizers is at a level harmless for fish.

For example, when oxidants are generated in farming water, the farming water will have 5-20 types of oxidants such as $NaOCl$, $NaOBr$, and $O_3$. At this time, in the neutralization step, an example of the reaction mechanism of the neutralizers with regard to the oxidant in the farming water is shown in reaction formula 3. Through this reaction mechanism, the residual oxidants in the sterilized farming water are removed through neutralization.

[Reaction formula 3]

$$NaOCl\text{(oxidant)} + H_2O_2 \text{ (oxidative neutralizing agent)} \rightarrow NaCl + H_2O + O_2 \uparrow$$
$$NaOBr\text{(oxidant)} + H_2O_2\text{(oxidative neutralizing agent)} \rightarrow NaBr + H_2O + O_2 \uparrow$$
$$Zn\text{(metal boost neutralizing agent)} + NaOCl\text{(oxidant)} \rightarrow ZnO + NaCl$$
$$NaHSO_3\text{(reducing neutralizing agent)} + NaOCl\text{(oxidant)} \rightarrow NaCl + NaHSO_4$$
$$NaOCl\text{(oxidant)} + Na_2S_2O_3\text{(neutral salt neutralizing agent)} + 2NaOH \rightarrow NaCl + 2Na_2SO_4 + H_2O$$
$$O_3\text{(oxidant)} + 3SO_2\text{(gas neutralizing agent)} + 3H_2O \rightarrow 3H_2SO_4$$
$$2Na_2S_2O_4 \text{ (neutral salt neutralizing agent)} + H_2O \rightarrow Na_2S_2O_3 + 2NaHSO_3$$

As shown in the reaction formula, the present invention provides a sterilization method that is different from the existing methods and that can be used as a desirable sterile aquaculture system, wherein the residual oxidant in farming water is removed through neutralization by utilizing neutralizers, all the fish-harming germs are killed in the sterile farming water that has undergone sterilization and neutralization, practically no residual oxidant harmful for fish exist in the sterile farming water, no or little neutralizers harmful for fish remains in the farming water, and the aquaculture wastewater does not impair environments at all.

According to the present invention, it is possible to additionally create conditions for minimizing the quantity of the neutralizers input in the neutralization step.

For this purpose, in the neutralization step, a neutralization accelerant made of metallic neutralization substances can be additionally input in the chambers through which the sterilized farming water flows. According to the preferred embodiment of the present invention, proper neutralization for reducing oxidants can be carried out with the neutralization accelerants that can be additionally input in the neutralization step, wherein, for the neutralization accelerants, preferably one or more metals can be selected from, for example, transition metals or metals belonging to the group IVA, more preferably, one or more metals selected from the group IIIB, VIIIB, IB, VIB, and IVA, and most preferably, one or more metals selected from the groups of zinc, iron, copper, chromium, tint, or the ions thereof. At this time, neutralization accelerants can be input in one or more types selected from mesh drawings, powders, porous or non-porous granules, porous pellets, cylindrical blocks, or plates made of the said metal substances. The neutralization accelerants can facilitate neutralization reaction in the farming water.

In addition, according to the preferred embodiment of the present invention, an aeration step can be added to the neutralization step for removing oxidants by blowing in air. The methods for blowing in air in the aeration step may include, but are not limited to, the typical means of a blower or a compressor. Addition of the aeration step for blowing in air can also further reduce the oxidant by accelerating the neutralization reaction along with the neutralization accelerants. It can also make the neutralization accelerants spread and move for facilitating them to react with the farming water. According to the present invention, instead of aeration, a mixer can also be utilized to make the neutralization accelerants spread in the farming water. Alternatively, both aeration and mixing can be utilized for the purpose.

According to the preferred embodiment of the present invention, in the neutralization step, both aeration and mixing can be utilized in addition to the input of neutralizers. When air is blown from the lower part of the system in the aeration step, highly preferable neutralization can be implemented because the neutralization accelerants, which are made of the said metallic substances and added to the farming water containing the neutralizers and flowing in the chambers, can contribute to the performance of the neutralization by being spread and moved quickly in the farming water.

According to the present invention, neutralization of the residual oxidants in the sterilized farming water in the said method utilizing neutralizers can rather easily reduce the residual oxidants in the farming water to a level of 0.06 ppm or less or, more preferably, 0.01 ppm or less. However, it may not be easy to reduce the residual oxidant in the farming water to a level of 0.005 ppm or, more preferably, 0.003 ppm. In such case, to treat a large quantity of farming water in a short period for reducing the residual oxidant to a level of 0.003 ppm or less, one or more neutralizers selected from thiosulfate inorganic bases, sodium dithionite, ascorbic acid, sodium ascorbic acid, cysteine, sulfite gas, sodium sulfite, sodium meta-bisulfite, potassium meta-bisulfite, acid sodium sulfite, and peroxide can be utilized. In particular, to reduce the neutralization reaction time for reducing oxidant, additional input of neutralization accelerants made of the said metallic substances along with the input of the said neutralizers and an additional application of the aeration step are needed. For example, such processes can reduce the residual oxidants in farming water having a large quantity of 60 T/min or more to a level of 0.330 ppm or less within a maximum of 1 hr.

Meanwhile, according to the present invention, the sterilization step (c) and the neutralization step (d) are consecutively carried out as connected to each other directly in the process where the farming water flows continuously. In addition, according to the current convention, the sterilization step (c) and the neutralization step (d) are carried out in a multiple number of chambers that are compartmented by partition walls, wherein the farming water is led or pumped in the compartmented chambers, flows in one direction, and undergoes steps (c) and (d).

According to the present invention, both the sterilization step and the neutralization step comprise a multiple number of chambers, wherein, the flowing path is structured such that the flow passes through the upper parts and the lower parts of the chambers, such that the farming water undergoes the sterilization step while continuously flowing up and down through the flowing path, and then undergoes the neutralization step while flowing in a similar manner. More specifically, the farming water containing oxidants flows through the lower part of chamber 1 to chamber 2, and flows through the upper part of chamber 2. Then, when the neutralizers are input at the upper part of chamber 2 between chamber 2 and chamber 3, the farming water undergoes the neutralization step while it flows through chamber 3 to a number of next chambers, for example, chamber 4 to chamber 8, in a similar manner as it passes through chamber 1 to chamber 2. If the system is structured such that the farming water flows up and down through multiple chambers when it undergoes the sterilization step and the neutralization step, the flowing water-type sterile water aquaculture method can be preferably applied in a relatively small space, and can act favorably in terms of the oxidant contact conditions in the sterilization step and the neutralization reaction in the neutralization step.

The number of chambers through which the farming water flows between the sterilization step and the neutralization step may be determined depends on the quality of the farming water, the concentration of the oxidants generated, the performance conditions of the sterilization step and the neutralization step, the size or local environments of the aquaculture, the dimensions of the chambers, the size of the farm, and the supply quantity of the farming water, etc. The total number of the chambers for the sterilization step and the neutralization step is two to eight and, preferably, four to six, in consideration of the sterilization effect, the neutralization effect, the adjustment of the neutralization time, etc.

According to the present invention, the residual oxidants contained in the farming water are removed in the neutralization step, wherein oxidant remains in a considerable concentration in the farming water at the earlier phase of the neutralization step and gradually decreases along with the progress of the neutralization. Therefore, because the concentration of the residual oxidants in the farming water is large at the earlier phase of the neutralization step, sterilization may partially continue in the neutralization step, even if the farming water has already undergone the sterilization step. However, at the later phase of the neutralization, sterilization does not practically occur because most of the oxidants are removed, and most of the fish-harming germs are killed.

As such, the present invention that enables highly efficient sterilization of the farming water can be implemented in a manner that the sterilization step and the neutralization step are carried out continuously, and sterilization continues in the earlier phase of the neutralization step.

According to the present invention, the sterile farming water, which has undergone the sterilization step and the neutralization step, can be directly supplied to an aquaculture tank, wherein the concentration of the oxidant in the sterile farming water should be 0.06 ppm or less; 0.01 ppm or less, preferably; 0.005 ppm or less, more preferably; or 0, most preferably to be appropriate for aquaculture. In addition, the concentration of the neutralizers should be 1 ppm or less; 0.01 ppm or less, preferably; 0.5 ppm or less, more preferably; and 0, most preferably.

According to an embodiment of the present invention, if, for example, the farming water treatment tank has a structure consisting of eight compartmented chambers for the sterilization step and the neutralization step for the long-term sterilization of farming water containing oxidants, the farming water containing oxidants undergoes sterilization step through, for example, five chambers, from chamber 1 to chamber 5, wherein sterilization is carried out in the farming water itself while it flows from chamber 1 to chamber 5. Then, neutralizers are input at the upper part of chamber 5, and the farming water, which has undergone the sterilization in chamber 1 to chamber 5, flows through three chambers, from chamber 6 to chamber 8, wherein it undergoes the neutralization step.

According to the present invention, both the sterilization time and the neutralization time can be adjusted and designed depending on the number and sizes of the chambers that have partition walls inside the farming water treatment tank. For example, for an inland water tank-type farm having a water area of 5,000 m$^2$, wherein a farming water quantity of 60 m$^3$/min is supplied by pumping, oxidants are continuously generated at a level of 0.7 ppm, and the sterilization time is 4 min: if the dimensions of each of the eight compartmented chambers are 6 m length, 5 m width, and 8 m height, as the flow time is 4 min, the sterilization time will be naturally 4 min, and the neutralization time for removing oxidants will be calculated to be 28 min, that is, 4 min $\times$ 7 chambers. Meanwhile, if no sterilization is needed for a part of the farming water having a flow volume of 30 m$^3$/min supplied from the underground water, then sterilization will be needed only for the remaining 30 m$^3$/min that is not underground water. If the dimensions of each chamber are 6 m length, 5 m width, and 8 m height, the sterilization time will be 8 min, and the neutralization time will be calculated to be 56 min, that is, 8 min $\times$ 7 chambers.

As not only the types of neutralizers and the neutralization time are highly important in the neutralization step, depending on the concentration of the oxidant generated, the neutralization should be carried out such that the neutralization time is short, that is, 1-48 min, and the concentration of the residual oxidants is 0.06 ppm or less or, preferably, 0.01 ppm or less. In the present invention, the preferred neutralization time is 1-16 min, and the preferred concentration of residual oxidants is 0.06 ppm or less. If the neutralization time is long and the number of neutralization chambers is more than seven, it can be hardly commercialized for the aquaculture industry because the efficiency of treatment will become very low in terms of space and time for neutralization.

In other words, according to the present invention, because the concentration of infection caused by pathogenic germs and pathogenic microorganisms, such as scuticociliate, vary depending on the regions, the concentration of oxidant generated in collected farming water and the sterilization time can be adjusted depending on the in situ conditions of aquaculture farms. Accordingly, the size and number of chambers for the sterilization step and the neutralization step can be adjusted differently, as exemplified above.

As such, according to an embodiment of the present invention, the sterilized farming water that has undergone a multiple number of chambers in the neutralization step can be neutralized such that the concentration of the total residual oxidant becomes almost 0, 0.06 ppm or less, or 0.003 ppm or less in most cases, depending on the types of neutralizers and the neutralization time. In the neutralization step according to the present invention, oxidant can be removed easily in a low-cost and highly efficient manner because no less than 99%, that is, 99.9%, of the total residual oxidants in the sterilized farming water is removed in most cases.

According to the present invention, the sterile farming water that has undergone the neutralization step goes through the sterile farming water supply step (e) and is supplied to a farming water tank of an aquaculture farm.

At this time, only the sterile farming water can be supplied to the farming water tank or can be supplied as mixed with another farming water such as the underground water that contains no fish-harming germs. In the sterile farming water supplied to the farming water tank according to the present invention, fish-harming germs are killed, and no or very little residual oxidants exist, which can create highly favorable conditions for aquaculture and can improve aquaculture efficiency to a great extent.

According to the present invention, the sterile farming water is continuously supplied to and the wastewater is continuously discharged from the farming water tank in a preferable manner. Therefore, the farming water can remain as constantly filled with high-quality farming water because the supplied sterile farming water is supplied continuously in a replenishing manner and discharged without remaining in the farming water for a long period.

According to the present invention, the sterile farming water supplied to the farming water undergoes the aquaculture wastewater discharge step (f), wherein the aquaculture wastewater is discharged from the farming water tank. As such, the sterile farming water is continuously supplied to the farming water tank, and the aquaculture wastewater is continuously discharged after the sterile farming water is utilized in the aquaculture. The discharged aquaculture wastewater is eco-friendly, having a sterile quality, and will not have any harmful effects to the environment.

Meanwhile, the present invention includes a sterile aquaculture system to which the flowing water-type sterile aquaculture method is applied.

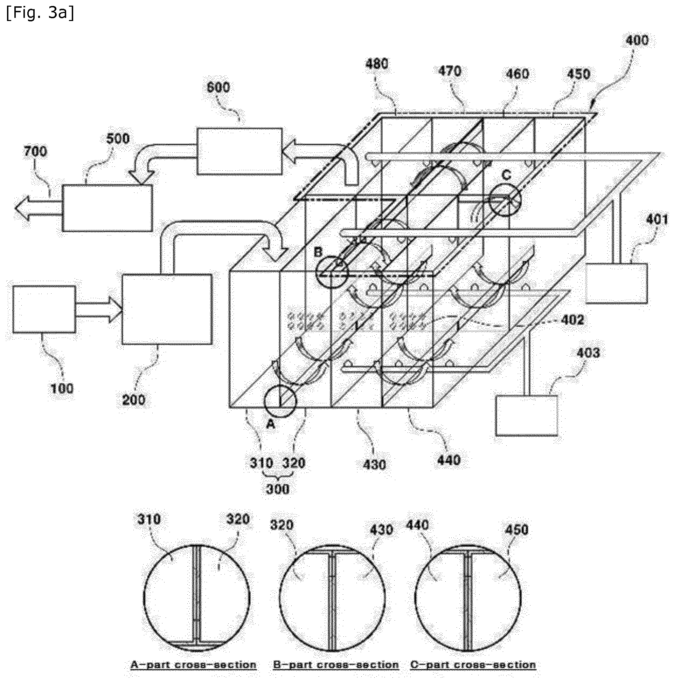

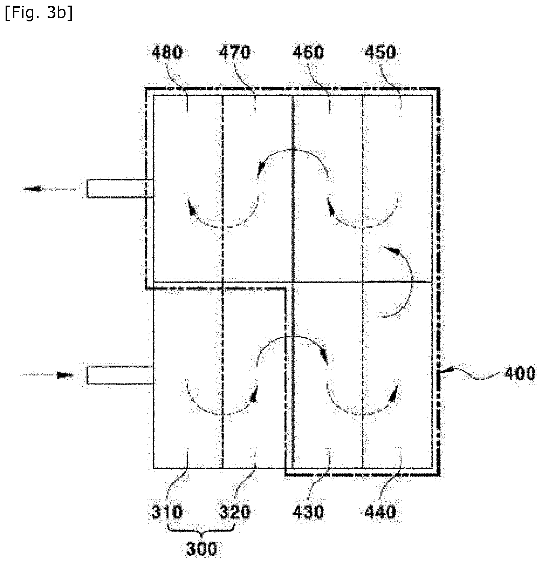

The preferred embodiment of the flowing water-type sterile aquaculture system, wherein the flowing water-type sterile aquaculture method according to the present invention is applied, can have a structure as described in Figures 2, 3a, and 3b. Figure 2 is a schematic view of an embodiment of the flowing water-type sterile aquaculture system according to the present invention, providing a detailed description of an embodiment of the sterile aquaculture system (SAS).

As shown in Figure 2, the flowing water-type sterile water aquaculture system according to the present invention can consist of a farming water supply part (100); an oxidant generation part (200); a sterilization part (300), including farming water flow chambers; a neutralization part (400), including farming water flow chambers; a sterile farming water supply part (600) for supplying sterile farming water to a farming water tank (500); and an aquaculture wastewater discharge part (700).

According to the present invention, for collecting freshwater or seawater, farming water conveying pipes can be connected to the farming water supply part (100) from a place where freshwater or seawater exists. The farming water supply part (100) can include a pump for water supply.

The farming water collected by the farming water supply part (100) is conveyed to the oxidant generation part (200). The oxidant generation part (200) is preferably structured such that it includes a tank for the pre-treatment of the farming water, and the water tank is equipped with an oxidant generation device (210) for generating oxidants in the farming water. Here, for the oxidant generation device, an electrolyzer is used.

The farming water, wherein oxidant is generated by an oxidant generation device at the oxidant generation part (200), is conveyed to the sterilization part (300) by a farming water conveying device (such as a pump). The sterilization part (300) includes farming water flow chambers, wherein fish-farming germs existing in the farming water are sterilized by the residual oxidants in the farming water while the supplied farming water flows.

According to the typical structure of the preferred embodiment of the present invention, the sterilization part (300) can be structured to have, for example, a total of eight chambers, as shown in Figures 3a and 3b.

Figures 3a and 3b are the exemplary views of a specific embodiment of the structure of the sterilization part (300) and the neutralization part (400), which are the major parts of the sterile aquaculture system according to the present invention, wherein Figure 3a is a diagrammatical view of the eight chambers comprising the sterilization part (300) and the neutralization part (400), with the arrows illustrating the movement path of the farming water through the chambers, and Figure 3b is a diagrammatical view of the plane structure of the eight chambers comprising the sterilization part (300) and the neutralization part (400).

As shown in Figures 3a and 3b, the sterilization part (300) can comprise one or more, for example, two, farming water flow chambers (310 and 320) for the continuous supply and movement of the farming water. The farming water containing the oxidants generated by the oxidant generation part (200) is sterilized by the oxidants that come into contact with the fish-harming germs in the farming water while the farming water flows through chamber 1 (310) and chamber 2 (320), which are the farming water flow chambers of the sterilization part (300). The sterilization part that has two farming water flow chambers (310 and 320) may be structured alternatively to have one, two, or more chambers.

The farming water sterilized in the sterilization part (300) flows to the neutralization part (400), wherein the residual oxidants are neutralized for being removed from the farming water. The neutralization part (400) according to the present invention has a neutralizer input part (401), wherein neutralizers are input while the sterilized farming water flows, and farming water flow chambers, wherein the residual oxidant in the farming water are removed by means of neutralization while the farming water containing the neutralizers continuously flows.

The neutralization part (400) has a number of farming water flow chambers (430, 440, 450, 460, 470, and 480) in a similar manner or, preferably, in the same manner as that of the sterilization part (300). The farming water flow chambers of chamber 3 (430) to chamber 8 (480) of the neutralization part (400) are structured at uniform intervals. Therefore, after sterilization is carried out in chamber 1 (310) and chamber 2 (320) of the sterilization part (300), the sterilized farming water is neutralized while it continuously flows in an identical manner in chamber 3 (430) to chamber 8 (480) of the neutralization part.

According to the preferred embodiment of the present invention, one or more neutralization accelerants (402) selected from the said transition metals or metals belonging to the IVA family can be input in each of the chambers of the neutralization part (400). The specific shapes of the neutralization accelerants (402) can be mesh drawings, powders, porous or non-porous granules, porous pellets, cylindrical blocks, or plates that can accelerate neutralization by expanding the area of the neutralizers contacting the farming water. Input of the neutralizers facilitates the neutralization of the residual oxidant in the farming water, and they can be additionally input ether in some or all parts of the chambers of the neutralization part (400).

In addition, according to the preferred embodiment of the present invention, aeration devices (403) can be installed in each of the chambers of the neutralization part (400). In particular, the aeration devices (403) applied in addition to the neutralizers can facilitate the neutralization by spreading the neutralizers in the neutralization chambers and can be additionally applied separately for accelerating the neutralization. In addition, mixers (not illustrated) can be installed in the chamber for mixing the farming water or the neutralization accelerants for facilitating the neutralization. For a specific example, one or more types of devices can be further included as selected from a group of a blower for generating bubbles for improving the reaction efficiency of the chambers, a compressor for reducing the reaction time by facilitating the contact of the neutralizers with the substance in the farming water by mixing the farming water with the force of the air, a mixer for increasing the time in which the neutralizers come into contact with the oxidants in the farming water with physical force, and a circulating pump for making the farming water flow while rotating several times.

According to the present invention, each of the chambers from chamber 1 (310) to chamber 8 (380) has partition walls that compartmentalize it from another chamber. To explain the structure of the partition walls specifically by referring to Figures 3a and 3b, the lower part of the partition wall between chamber 1 (310) and chamber 2 (320) is open in a given height, and the upper part of the partition wall between chamber 2 (320) and chamber 3 (430) is lowered in a given height. Therefore, the farming water flows from the upper part of chamber 1 (310) to the lower part of chamber 2, and flows from the lower part of chamber 2 (320) to the upper part of chamber 3 (430) to overflow the upper part to the next chamber. Accordingly, the farming water continuously flows in the flowing water type while it enters the upper part of chamber 1 (310), and flows up and down in a downstream direction to chamber 8 (480).

In the process in which the farming water containing the oxidants flows from chamber 1 (310) to chamber 8 (480), the sterilization of the farming water is carried out by the residual oxidants in it while it flows between chamber 1 (310) and chamber 2 (320), and the neutralization starts when the neutralizers are supplied from the neutralizer supply device (401) at the upper part of chamber 2 (320) and while the farming water overflows from chamber 2 (320) to the upper part of chamber 3 (430). Then, the sterilized farming water is neutralized while it flows between chamber 3 (430) and chamber 8 (480). Through such process, the residual oxidants in the farming water are gradually removed such that the neutralization is completed when the farming water reaches chamber 8 (480) and such that the oxidant in the farming water is either substantially no residue, at least 0.06ppm or less, and preferably remains below a 0.003ppm. Then, the sterile farming water is sent to the farming water tank (500) where aquaculture is carried out.

According to the present invention, the sterile farming water supply part (600) that supplies sterile farming water, which has been sterilized and neutralized and flows from chamber 8 (480), which is located at the end of the neutralization part (400), to the farming water tank (500) can include a mixing tank (610), wherein sterile groundwater and seawater are mixed. The mixing tank (610) can be structured such that it is installed at a height of a few meters from the ground and such that it supplies sterile farming water to the farming water tank (500) by using water pressure. At this time, the design can be made such that the mixing tank (610) is located at the same height with that of the chambers in the sterilization part (300) and the neutralization part (400).

The sterile farming water supplied to the farming water tank (500) provides an environment in which fish can be cultured in a healthy manner in the sterile farming water of the farming water tank (500).

After being utilized for aquaculture in the farming water tank (500), the sterile farming water is continuously discharged through the aquaculture wastewater discharge part (700). At this time, the discharged aquaculture wastewater does not adversely affect the environment because harmful substances in the farming water have been sterilized and neutralized and because the sterile farming water has been used by fish in a natural manner.

Meanwhile, according to the present invention, the structure of the sterilization part (300) and the neutralization part (400) of the sterile aquaculture system has a characteristic significance because the parts are structured in a highly efficient and preferable manner.

The preferred embodiment of the present invention exemplifies a sterile aquaculture system that is composed of a total of eight chambers, that is, chamber 1 to chamber 8, for the sterilization part and the neutralization part, wherein the sterilization part (300) is composed of two chambers, and the neutralization part (400) is composed of six chambers.

According to the preferred embodiment of the present invention, the sterilization part (300) can consist of one to seven chambers, and the neutralization part can also consist of one to seven chambers. With such number of chambers, a sterile aquaculture system can be structured, to which the flowing water-type sterile aquaculture method according to the present invention, can be applied, whereas the number, dimensions, and shape of the chambers in the sterilization part and the neutralization part can be properly adjusted and designed depending on the size of an aquaculture farm as well as the quality/quantity of the farming water.

As aforementioned, according to the preferred embodiment of the present invention, an ozone supplier or an electrolyzer can be installed at the oxidant generation part (200) such that oxidant is generated in the farming water supplied from the farming water supply part (100). Then, the farming water containing the generated oxidant is supplied to the chambers of the sterilization part (300).

Both the sterilization part (300) and the neutralization part (400) have a number of compartmented chambers, and each of the chambers can be arranged to have a structure in which farming water is led or pumped. According to the present invention, the chambers can be compartmented by one partition wall or partition walls of which the number is the number of the chambers minus one depending on the total number of chambers. The lower part of the first partition wall has a hole that allows the inflow of the farming water. Then, the farming water flows into the first chamber through its lower part and continues to flow to the next chamber. The upper part of the next second partition wall has an overflow part of which the height is lower than that of the next partition such that the farming water overflows the partition wall of the second chamber to the third chamber. The structure allows the farming water to flow through the lower parts of the partition walls at odd number places, and the upper parts of the partition walls at even number places. As such, when the farming water flows through the chambers, it flows up and down through the holes at the lower parts of the partition walls and overflows at the upper parts of the partition walls in one direction in an alternate manner, while it is sterilized and neutralized.

In addition, the neutralization starts when the neutralizers are basically input through the neutralizer input part at the upper part of the last chamber in the sterilization part while the farming water naturally overflows through the chambers, and the multi-step neutralization is carried out while the farming water flows through a number of chambers.

At this time, the neutralizers can be input at the upper part or the lower part of the last chamber in the neutralization part. If the sterilization time is to be extended, the neutralizers can be additionally input at the upper part and the lower part of another chamber for neutralization at an appropriate place such that sterilization additionally continues in the neutralization process. The neutralization input process can also be adjusted and designed depending on the size of the aquaculture farm, the quality of the farming water, and the quantity of the supplied water.

Application of the flowing water-type aquaculture method according to the present invention and, in particular, utilization of the sterile aquaculture system according to the present invention can enable low-cost and high-efficiency sterile aquaculture. The flowing water-type aquaculture method and the sterile aquaculture system according to the present invention do not require antibiotics or vaccines, and are very useful as a new aquaculture method different from the existing methods.

In addition, the new sterile aquaculture system according to the present invention, unlike the existing systems, generates high-concentration oxidant (0.1-7 ppm) for completely killing fish-harming germs such as pathogenic germs, and supplies sterile farming water at a quantity of 30-60 T/min in an excellent manner in terms of time, space, and costs. In addition, with a simple adjustment of the system design, it can supply sterile farming water at a quantity of thousands or tens of thousands of tons per minute, and can enable highly economical and eco-friendly large-scale sterile aquaculture because it can reduce the concentration of the residual oxidants in the sterilized farming water to a level of at least 0.06 ppm or less, preferably 0.01 ppm or less, and more preferably 0.003 ppm or less.

Hereinafter, an embodiment of the present invention will be described in detail. However, the present invention is not limited to the following examples of embodiment.

For the following examples of embodiment, a flowing water-type sterile aquaculture system is structured and tested, wherein the system is composed of eight chambers having dimensions of 60 cm of length, 50 cm of width, and 80 cm of height, which are equivalent to 1/1,000 of an actual facility that can be applied to the size of an aquaculture farm having an area of 5,000 $m^2$.

Comparative example **1**

For the farming water having a quantity of 60 T/min, which is equivalent to the quantity of farming water used in a typical medium- or small-sized aquaculture farm having an area of 5,000 $m^2$, to sterilize the farming water by generating oxidants having a concentration of 0.8 ppm (mg/L) with an electrolyzer or an ozone supplier and then remove the oxidants using activated carbon, as much as 400 $m^3$ of activated carbon will be needed, and 28 activated carbon towers having dimensions of 5 m of diameter and 1.5 m of height must be installed.

Therefore, it was concluded that such method cannot be utilized in an aquaculture farm that uses a large quantity of farming water because such method requires high costs and a huge space, and because regeneration treatment is difficult.

Manufacturing embodiment example 1

At an aquaculture farm located in Pyoseon-myeon, Seogwipo-si, Jeju Island in Korea, the concentration of the bromate generated by the electrolysis method was analyzed, whereas the voltage and the current density was changed, as shown in Table 3 at a flow rate of 20-30 cm/s, which is typical for the water supply for aquaculture farms.

As the concentration of organic substances existing in seawater, the concentration of sodium bromate (NaBr), and the concentration of salt depend on the locations in the region, the test location in Pyoseon-myeon was selected because it was deemed to be the most representative location in the region.

[Table 3]

| Voltage (Volt) | Current Density (A/cm$^2$) | TRO concentration (mg/L)(ppm) | Bromate concentration ($\mu$g/L)(ppd) | Remark (Detection limit 0.27$\mu$g/L) |
|---|---|---|---|---|
| 2.5 | 0.00694 | 0.1 | | |
| 2.6 | 0.00865 | 0.8 | | |
| 2.8 | 0.0104 | 1.42 | | |
| 3.0 | 0.0137 | 2.0 | | vestige |
| 3.2 | 0.018 | 2.5 | | vestige |
| 3.4 | 0.0245 | 3.5 | | vestige |
| 3.6 | 0.032 | 4.7 | 4.46 | |
| 3.8 | 0.0383 | 5.2 | 5.04 | |
| 4.0 | 0.0465 | 6.0 | 6.54 | |
| 4.2 | 0.0538 | 6.7 | 9.94 | |
| 4.4 | 0.0612 | 7.0 | 9.99 | |
| More than 4.5 | | 10.0 | 51.1 | |
| More than 5.0 | | 16.0 | 61.5 | |
| NaBrO$_3$ (reagent grade) to a solution prepared with distilled water to dissolve the 10ppb | | | 8.93 | Control |

Manufacturing embodiment example 2

The underground seawater in Pyoseon-myeon, which contains little amounts of organic substances, was electrolyzed at a flow rate of 20-30 cm/s and in the conditions as shown in Table 4, and the concentration of bromate was measured. At this time, the concentration of sodium bromate (NaBr) in the seawater was 63.3 mg/L.

[Table 4]

| Voltage(Volt) | Bromate content($\mu$g/L) | Remark |
|---|---|---|
| 2.8 | None | Detection limit 0.27$\mu$g/L |
| 3.0 | None | Detection limit 0.27$\mu$g/L |
| 3.2 | None | Detection limit 0.27$\mu$g/L |
| 3.6 | 4.4 | |
| 3.8 | 5.0 | |

Manufacturing embodiment example 3

The seawater in Pyoseon-myeon was electrolyzed at a flow rate of 20-30 cm/s and in the conditions as shown in Table 5, and the concentration of bromate was measured. The result is as shown in Table 5. At this time, the concentration of sodium bromate (NaBr) in the seawater was 63.7 mg/L.

[Table 5]

| Voltage(Volt) | Bromate content($\mu$g/L) | Remark |
|---|---|---|
| 3.2 | None | Detection limit 0.27$\mu$g/L |

(continued)

| Voltage(Volt) | Bromate content($\mu$g/L) | Remark |
|---|---|---|
| 3.6 | None | Detection limit 0.27$\mu$g/L |
| 3.8 | 4.49 | Detection limit 0.27$\mu$g/L |
| 4.0 | 7.43 | |
| 4.2 | 9.59 | |

Manufacturing embodiment example 4

The underground seawater in Pyoseon-myeon was electrolyzed at a low flow rate of 10-20 cm/s for generating high-concentration TRO in the following conditions, the treated seawater was diluted with seawater such that the concentration of TRO becomes 1 ppm, and the concentration of bromate was measured. The result is as shown in Table 6.

[Table 6]

| Voltage (Volt) | TRO concentration of The original water(mg/L, ppm) | Diluted TRO concentration (mg/L, ppm) | Bromate content ($\mu$g/L) | Remark |
|---|---|---|---|---|
| 3.2 | 3.4 | 0.95 | None | Detection limit 0.27$\mu$g/L |
| 3.4 | 4.9 | 1.05 | None | Detection limit 0.27$\mu$g/L |
| 3.6 | 5.9 | 1.07 | None | Detection limit 0.27$\mu$g/L |
| 3.8 | 6.8 | 0.94 | 4.1 | |

Embodiment Example 1

First, the farming water collected from the coastal waters of Jeju Island was electrolyzed at a voltage and a current at a level that would make the concentration of the total residual oxidant (TRO) 1.0 ppm in a continuous manner, and was supplied to the sterilization part at a flow rate of 60 L/min. At this time, a flowing water-type sterile aquaculture system, which has the same structure as illustrated in Figures 2, 3a, and 3b, according to the present invention was utilized, and mesh-type zinc nets were installed at two locations at a 40 cm interval in the five chambers that conformed to chambers 3-8 (430, 440, 450, 460, and 470 in Figure 3a) of the neutralization part. Next, a solution having a concentration of 0.265% of the pentahydrate of sodium thiosulfate ($Na_2S_2O_3 \cdot 5H_2O$) was prepared in a separate container such that a solution having a concentration of 1.0-1.7 times of that of the equivalent-to-equivalent concentration of the total residual oxidant (TRO) in the supplied sterilized farming water is input. Then, the solution was input in chamber 3 (430 in Figure 3a), and air was blown in with a blower to accelerate mixing.

At this time, the reason why the concentration of sodium thiosulfate, which is the neutralizer, should be 1.7 times of that of the equivalent-to-equivalent concentration was surmised is because the oxidants generated by the electrolyzer and the ozone supplier were not removed by the oxidation-reduction reaction only, but there were various other types of generated oxidants than NaOCl. In the embodiment example, it was verified, through a long series of repeated tests and experiments, that the concentration of the oxidant-containing farming water was neutralized to 0.000 ppm after a certain time when the neutralizer made of sodium thiosulfate was input at a concentration of about 1.7 times of that of the equivalent-to-equivalent concentration.

At this time, air was blown in to the neutralization part between chamber 4 (440 in Figure 3a) and chamber 8 (480 in Figure 3a), but the pentahydrate solution of sodium thiosulfate was not added. The reaction that removes sodium hypochlorite, which is one of the total residual oxidants generated by the electrolyzer, with sodium thiosulfate is surmised to be made into reaction formula 4.

[Reaction formula 4]        $4NaClO + Na_2S_2O_3 + 2NaOH \rightarrow 4NaCl + 2Na_2SO_4 + H_2O$

The result of the measurement of the ratio of the total residual oxidant in the farming water after the neutralization is as shown in Table 7.

[Table 7]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 4min | 4 min (8 min) | 4 min | 4 min (8 min) | 4 min (12min) | 4 min (16min) | 4 min (20min) | 4 min (24min) |
| TRO | 1.01ppm | - | 0.05ppm | 0.03 | 0.02 | 0.01 | 0.005 | 0.000 |
| Removal rate | 0% | - | 95% | 97% | 98% | 99% | 99.5% | 100% |

Embodiment Example 2

For a sterile aquaculture system with the same farming water as that in embodiment example 1, oxidants were generated with an ozone supplier, not by an electrolyzer, for the farming water treatment process.

The result of the measurement of the ratio of the total residual oxidant in the farming water after the neutralization is as shown in Table 8.

[Table 8]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 4min | 4 min (8 min) | 4 min | 4 min (8 min) | 4 min (12min) | 4 min (16min) | 4 min (20min) | 4 min (24min) |
| TRO | 1.02ppm | 0.02 | 0.06 | 0.05 | 0.04 | 0.01 | 0.005 | 0.000 |
| Removal rate | - | - | 94% | 95.1% | 96% | 99% | 99.5% | 100% |

It is surmised that the major content of the oxidants generated with an electrolyzer is sodium hypochlorite (NaOCl) or hypochlorous acid (HOCl), and that the major content of the oxidant generated with an ozone supplier is hydrobromous acid (HOBr) or sodium hypobromite (NaOBr). However, it was verified that this example completely removed whatever oxidants that were generated.

Embodiment Example 3

For a sterile aquaculture system with the same farming water as that in embodiment example 1, the voltage and the current of an electrolyzer were adjusted at a level that would make the concentration of the total residual oxidant (TRO) 1.0 ppm in a continuous manner, and was supplied to chamber 1, which was the sterilization part, at a flow rate of 60 L/min. Next, a solution having a concentration of 0.265% of the pentahydrate of sodium thiosulfate was prepared in a separate container, and the farming water treatment processes were carried out in the same manner except that the solution of the pentahydrate of sodium thiosulfate having a concentration of 1.7 times of that of the equivalent-to-equivalent concentration of the total residual oxidant (TRO) is input at a rate of 30 mL/min.

The result of the measurement of the ratio of the total residual oxidant in the farming water after the neutralization is as shown in Table 9.

[Table 9]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 8min | 8 min (16min) | 8 min | 8 min (16min) | 8min (24min) | 8min (32min) | 8min (40min) | 8min (48min) |
| TRO | 1.02ppm | 1.0 | 0.05 | 0.03 | 0.01 | 0.005 | 0.000 | 0.000 |
| Removal rate | - | - | 94% | 95.1% | 96% | 99% | 99.5% | 100% |

As shown in Table 3 above, when the oxidant of the farming water having a concentration of the total residual oxidants (TRO) at 1.0 ppm was removed through the neutralization tank having dimensions of 60 cm length, 50 cm width, and 80 cm height, and at a flow rate of 30 L/min, the oxidant removal rate already reached 100% at chamber 7 (470 in Figure 3a). Therefore, it was verified that the installation of an additional chamber 8 (480 in Figure 3a) was not needed.

In other words, the sterile aquaculture system can be designed and manufactured to meet the size of aquaculture farms, in consideration of the concentration of the oxidant, the input rate, and the size of the tank, for the commercialization of the system at proper sizes for the industry.

Embodiment Example 4

All the conditions being the same as those of embodiment example 1, the anhydride (a) of sodium dithionite having a concentration of 0.572% and the hydrate thereof having a concentration of 0.336% (0.572 / 1.7) were prepared and input in the neutralization tank at a rate of 60 mL/min for neutralization. It was surmised that the neutralization reaction would be carried out according to reaction formula 5. The result is as shown in Table 10.

[Reaction formula 5]     $2Na_2S_2O_4 + H_2O \rightarrow Na_2S_2O_3 + 2NaHSO_3$ $Na_2S_2O_3 + 4NaOCl +2NaOH \rightarrow 4NaCl + 2Na_2SO_4 + H_2O$ $2NaHSO_3 + 2NaOCl \rightarrow 2NaCl + 2NaHSO_4$

[Table 10]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 4min | 4 min (8 min) | 4 min | 4 min (8 min) | 4 min (12min) | 4 min (16min) | 4 min (20min) | 4 min (24min) |
| (a)TRO | 1.01 | 1.0 | 0.04 | 0.03 | 0.02 | 0.01 | 0.005 | 0.000 |
| (a) Removal rate | | Natural decrease | 96% | 97% | 98% | 99% | 99.5% | 100% |
| (b)TRO | | | 0.06 | 0.04 | 0.02 | 0.01 | 0.005 | 0.000 |
| (b) Removal rate | | | 94% | 96% | 98% | 99% | 99.5% | 0.000 |

According to the result of the test, it was verified that the concentration of the residual oxidant can be reduced to 0.06 ppm, which is appropriate for aquaculture, within a short period, and a cumulated neutralization time of 20-24 min can neutralize the farming water completely to a concentration level of 0.003 ppm.

Embodiment Example 5

All the conditions being the same as those of embodiment example 1, a solution of ascorbic acid having a concentration of 0.85% was prepared and input in the neutralization tank at a rate of 60 mL/min for the neutralization. It was surmised that the neutralization reaction would be carried out according to reaction formula 6. The result is as shown in Table 11.

[Reaction formula 6] $\qquad$ $C_6H_8O_6 + NaOCl \rightarrow C_6H_6O_6 + NaCl + H_2O$

[Table 11]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 4min | 4 min (8 min) | 4 min | 4 min (8 min) | 4 min (12min) | 4 min (16min) | 4 min (20min) | 4 min (24min) |
| TRO | 1.01 | 1.0 | 0.04 | 0.03 | 0.01 | 0.01 | 0.000 | 0.000 |
| Removal rate | | Natural decrease | 96% | 97% | 99% | 99% | 100% | 100% |

According to the result of the test, it was verified that ascorbic acid can complete the neutralization in a shorter period than inorganic neutralizers.

Embodiment Example 6

All the conditions being the same as those of embodiment example 1, a solution of cysteine mono-hydrochloride having a concentration of 1.69% was prepared and input in the neutralization tank at a rate of 60 mL/min for the neutralization. It was surmised that the neutralization reaction would be carried out according to reaction formula 7. The result is as shown in Table 12.

[Reaction formula 7] $\qquad$ $2C_3H_7NO_2S + NaOCl \rightarrow 2C_3H_6NO_2S + NaCl + 3H_2O + 2HCl$

[Table 12]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 4min | 4 min (8 min) | 4 min | 4 min (8 min) | 4 min (16min) | 4 min (24min) | 4 min (32min) | 4 min (40min) |
| TRO | 1.01 | 1.0 | 0.04 | 0.03 | 0.01 | 0.01 | 0.000 | 0.000 |
| Removal rate | | Natural decrease | 96% | 97% | 99% | 99% | 100% | 100% |

According to the result of the test, it was concluded that the neutralizer, which is an amino acid that constitutes bio-proteins, has an excellent neutralizing power for oxidant.

Embodiment Example 7

For a sterile aquaculture system with the same farming water as that in embodiment example 3, the zinc nets were removed, and aeration was not applied.
The results are indicated in Table 13.

[Table 13]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 8min | 8 min (16min) | 8 min | 8 min (16min) | 8min (24min) | 8min (32min) | 8min (40min) | 8min (48min) |
| TRO | 1.02 | 1.0 | 0.05 | 0.05 | 0.04 | 0.03 | 0.02 | 0.01 |
| Removal rate | - | Natural decrease | 95% | 95% | 96% | 97% | 98% | 99% |

When zinc nets and aeration were not applied, the concentration of the oxidant was reduced to below 0.01 ppm after about 48 min, which meant that it took rather a long time to remove the oxidant. Therefore, more or larger reaction chambers may be required.

Embodiment Example 8 ~ 9

For comparing the oxidant removal efficiencies of sodium sulfite and acid sodium sulfite, with all the conditions being the same as those of embodiment example 1, and with the surmise that neutralization would be carried according to reaction formula 8, a solution of sodium sulfite having a concentration of 0.604%, which is 1.7 times the equivalent concentration ($126.04 / 35.5 \times 1.7$), and a solution of acid sodium sulfite having a concentration of 0.586%, which is 1.7 times the equivalent concentration ($104.061 / 35.5 \times 1.7$), were prepared and input at a rate of 30 mL/min.
Then, the oxidant removal ratio of both neutralizers was measured and is shown in Table 14 in a comparative manner.

[Reaction formula 8]          $NaOCl + Na_2SO_3 \rightarrow NaCl + Na_2SO_4$   $NaOCl + NaHSO_3 \rightarrow NaCl + NaHSO_4$

[Table 14]

| Neut. type | Division | Cham. 1 Ster. part | Cham.2 Ster. part | Cham. 3 neut. part | Cham.4 neut. part | Cham.5 neut. part | Cham.6 neut. part | Cham.7 neut. part | Cham.8 neut. part |
|---|---|---|---|---|---|---|---|---|---|
| | Water flowing time (Summed) | 8min | 8 min (16min) | 8 min | 8 min (16min) | 8min (24min) | 8min (32min) | 8min (40min) | 8min (48min) |
| sodium sulfite (Comp. Ex.2) | TRO | 1.02 | 1.0 | 0.13 | 0.09 | 0.08 | 0.06 | 0.04 | 0.03 |
| | Removal rate | - | Natural decrease | 87% | 91% | 92% | 94% | 96% | 97% |
| Acidic sodium sulfite (Comp. Ex.3) | TRO | 1.02 | 1.0 | 0.14 | 0.08 | 0.08 | 0.07 | 0.04 | 0.04 |
| | Removal rate | | Natural decrease | 86% | 92% | 92% | 93% | 96% | 96% |

Embodiment Example 10

All the conditions being the same as those of embodiment example 3, a solution of peroxide (50%) was prepared for removing the oxidants, and the oxidant removal efficiency was measured. To use the neutralizer 1.7 times of that of the equivalent concentration that is surmised to follow the neutralization reaction according to reaction formula 9, a solution of peroxide (50%) having a concentration of 0.355% (35.5 / 34.01 $\times$ 2 $\times$ 1.7) was prepared and input in a separate neutralization tank at a rate of 30 mL/min. The result is as shown in Table 15.

[Reaction formula 9]     $NaOCl + H_2O_2 \rightarrow NaCl + H_2O + O_2$

[Table 15]

| Division | Cham.1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 8min | 8 min (16min) | 8 min | 8 min (16min) | 8min (24min) | 8min (32min) | 8min (40min) | 8min (48min) |
| TRO | 1.02 | 1.0 | 0.08 | 0.07 | 0.07 | 0.06 | 0.06 | 0.06 |
| Removal rate | - | Natural decrease | 92% | 93% | 93% | 94% | 94% | 94% |

Experiment Example 1: Test of the Neutralization Acceleration of Zinc Plate

A thin zinc plate (with a thickness of 1 mm) is cut into 4 pieces, having a width of 10 mm and a length of 200 mm, and suspended in a 2,000 mL beaker at 4 cm over its bottom. Then, 1,500 mL of an oxidant solution having a concentration of 2 ppm was poured in the beaker; the solution was stirred with a magnetic bar; and samples were taken after 8, 16, 24, 32, 40, and 48 min for measuring the oxidant removal ratio.
The results of experiment are indicated in Table 16.

[Table 16]

| Division | 8min | 16 min | 24 min | 32 min | 40 min | 48 min |
|---|---|---|---|---|---|---|
| TRO | 0.94 | 0.39 | 0.12 | 0.12 | 0.1 | 0.08 |
| Removal rate | 53% | 80.5% | 94% | 94% | 95% | 96% |

According to the result of the test, it was verified that zinc clearly accelerated oxidant removal.

Experiment Example 2: *Streptococcus parauberis* Microorganism Survival Experiment Measurement

*Streptococcus parauberis* microorganism was separately cultured and put into the farming water such that the concentration of *Streptococcus parauberis* microorganism, which causes most of the deaths of flatfish in farming water, becomes 105 CFU/mL. The farming water was electrolyzed such that the total residual oxidant was generated to have a concentration of 0.5 ppm, which is one-half of that of embodiment example 1, and input in chamber 1 (310 in Figure 3a), which is the sterilization part. In addition, to make the oxidant remaining time two times of that of embodiment example 1, chamber 2 (320 in Figure 3a) and chamber 3 (430 in Figure 3a) were used for the sterilization part, and the solution of the pentahydrate of sodium thiosulfate ($Na_2S_2O_3 \cdot 5H_2O$) having a concentration of 0.265%, which is 1.7 times of that of the equivalent-to-equivalent concentration of the oxidant, is input in chamber 4, which is the starting chamber of the neutralization part.
Then, the farming water was neutralized in chamber 5 (450 in Figure 3a) through chamber 8 (480 in Figure 3a), and a sample of the neutralized farming water was taken for the measurement of the total residual oxidant (TRO) and the number of *Streptococcus parauberis.* With the measurement, it was verified that the total residual oxidant was removed 100% and that the number of *Streptococcus parauberis* was reduced by 99.9% to 1-5 CFU/mL.
The results are indicated in Table 17.

[Table 17]

| Division | Cham. 1 Ster. part | Cham.2 Ster. part | Cham.3 neut. part | Cham.4 neut. part | Cham.5 neut. part | Cham.6 neut. part | Cham.7 neut. part | Cham.8 neut. part |
|---|---|---|---|---|---|---|---|---|
| Water flowing time (Summed) | 4min | 4 min (8 min) | 4 min | 4 min (8 min) | 4 min (12min) | 4 min (16min) | 4 min (20min) | 4 min (24min) |
| TRO | 0.5 | 0.4 | 0.3 | - | 0.03 | 0.02 | 0.001 | 0.000 |
| TRO Removal rate | - | Natural decrease | Natural decrease | Neutralized liquid injection | 94% | 96% | 99.8% | 100% |
| the number of live germs | - | - | - | 5 | 3 | 4 | 1 | 1 |
| Microorganism death ratio | - | - | - | 99.9% | 99.9% | 99.9% | 99.9% | 99.9% |

In the microorganism test, only the test for the number of live germs was carried out, but any identification test was not carried out. Even if the microorganism death ratio was shown to be 99.9%, it was judged that the *Streptococcus parauberis* was killed 100% because, in consideration of the shape of the growing colony of the detected microorganisms, it was not deemed to be *Streptococcus parauberis* that was injected intentionally.

Experiment Example 3: Test of Bromate in Cultured Fish

For the seawater and underground seawater in Pyoseon-myeon flowing at a rate of 400 L/min, for 20-30 cm/s, and at 2.7 V, oxidants were generated to have a TRO concentration of 1.2 ppm; the water was sterilized for 16 min (chambers 1-4 were used as the sterilization chambers); 55 mL of 1.5% neutralization solution was input in chamber 5; air was blown in through aeration for neutralization for 16 min; the TRO concentration was checked to be less than 0.01 ppm; and the farming water was supplied to the farming water tank.

On June 1, 2014, the flowing water-type sterile aquaculture was started for young fish having a weight of 5-10 g each that were put in a water tank having a diameter of 8 m. After 6 months, on December 1, 2014, two fish having a weight of 300-400 g were sampled randomly and crushed with a blender. Distilled water was added to make the total volume 2,000 mL; the solution underwent centrifugation; the liquid in the top layer was taken; and the concentration of bromate thereof was tested. According to the test, there was no bromate detected.

In addition, during the six months of the aquaculture, no death of fish occurred due to the following diseases:

① Rhabdo virus, VHSV(Viral Hemorrhagic Septicemia), Lymphocystis virus
② Vibrio anguillarum, etc
③ Edwardsiella tarda, etc.
④ Streptococcus parauberis, etc
⑤ Scuticocilate

Therefore, as evidenced by the embodiment example, it was verified that fish mortality ratio due to pathogenic microorganisms can be radically reduced if the flowing water-type aquaculture method and the sterile aquaculture system according to the present invention are applied, wherein fish-harming germs, such as various pathogenic microorganisms, in the farming water are killed; fish-harming oxidants are completely removed; and sterile farming water is supplied to the farming water tank. In addition, it was verified was that the aquaculture method is an excellent method that can be applied in a scale appropriate for the industry, wherein the sterile aquaculture system is designed and utilized to meet the sizes of aquaculture farms in consideration of the concentration of the residual oxidant in the farming water, the rate of farming water input, the size of the farming water tank, etc.

[Description of marks]

100 - Supply part of farming water

200 - The part of oxidant generation
300 - The part of sterilization treatment
310 - 1st chamber, 320 - 2nd chamber
400 - The part of neutralization treatment
401 - Neutralizing agent slot, 402 - neutralization booster
403 - Aeration device
430 ∼ 480 - 3rd chamber ∼ 8th chamber
500 - Water tank
600 - Supply part of sterilized farming water
610 - Mixture tank
700 - Outlet part of waste water

**Claims**

1. A flowing water-type sterile water aquaculture method comprising the following steps:

   (a) a farming water supply step for collecting freshwater or seawater and supplying it as farming water;
   (b) an oxidant generation step for generating oxidant in the supplied farming water through the electrolysis method, in which titanium or niobium is used as a substrate metal; freshwater or seawater is electrolyzed by an anode that is coated to have a thickness of 0.1-30 μm with ruthenium, iridium, tantalum, platinum, or an oxidant thereof; and a voltage between 2.51 and 4.4 V is applied to the electrolysis method such that bromate is generated with a concentration of 10 ppb or less;
   (c) a sterilization step for letting oxidant remain in the continuously flowing farming water and for sterilizing fish-harming germs in the farming water;
   (d) a neutralization step in which a neutralizer is input in the sterilized under continuously flowing farming water, and the oxidant is reduced such that the concentration of the residual oxidant in the farming water becomes 0.06 ppm or less;
   (e) a sterile farming water supply step for supplying the sterilized and neutralized farming water to a fish farming water tank; and
   (f) an aquaculture wastewater discharge step for discharging wastewater from the fish farming water tank,

   wherein steps (c) and (d) are carried out in two to eight compartmented chambers (310, 320, 430, 440, 450, 460, 470, 480), whereas the farming water is led or pumped in the compartmented chambers, flows in one direction, and sequentially undergoes the sterilization step (c) and the neutralization step (d) in the compartmented chambers, and wherein the chambers (310, 320, 430, 440, 450, 460, 470, 480) has a structure in which farming water flows continuously up and down through alternately placed partition walls, wherein a lower part of a partition wall is open in a given height and an upper part of the next partition wall is lowered in a given height, and such placement is repeated for a few times, such that the farming water flows over the upper part of a partition wall to the lower part of the next partition wall, flows through the lower part of the partition wall to the upper part of the next partition wall, and flows over the upper part of the partition wall to the lower part of the next partition wall.

2. The flowing water-type sterile water aquaculture method as in Claim 1,
   wherein the value of the total residual oxidant in step (c) is 0.1-7.0 ppm.

3. The flowing water-type sterile water aquaculture method as in Claim 1,
   wherein the sterilization of step (c) is carried out through reaction for 1-28 min.

4. The flowing water-type sterile water aquaculture method as in Claim 1,
   wherein step (d) comprises an additional step for accelerating the removal of oxidant by inputting a transition metal, a metal belonging to the group IVA, or one or more of the ions thereof as a neutralization accelerant.

5. The flowing water-type sterile water aquaculture method as in Claim 1,
   wherein step (d) comprises an additional step for accelerating the removal of oxidant by inputting one or more metals selected from a group consisting of zinc, iron, copper, chromium, tin, or the ions thereof, and an additional aeration step for removing oxidant by blowing in air.

6. The flowing water-type sterile water aquaculture method as in Claim 1,

wherein the sterilization of step (d) is carried out for 1-48 min.

7. The flowing water-type sterile water aquaculture method as in Claim 1,
wherein step (c) is carried out immediately after sterilization has been made by the oxidant coming into contact with the farming water, and input of neutralizers is continuously made for carrying out step (d).

8. The flowing water-type sterile water aquaculture method as in Claim 1,
wherein one or more neutralizers selected from thiosulfate inorganic bases, sodium dithionite, ascorbic acid, sodium ascorbic acid, cysteine, sulfite gas, sodium sulfite, sodium meta-bisulfite, potassium meta-bisulfite, acid sodium sulfite, and peroxide are used.

9. A flowing water-type sterile aquaculture system comprising the following:

a farming water supply part (100) that collects freshwater or seawater and supplying it as farming water;
an oxidant generation part (200) that generates oxidants in the supplied farming water by an electrolysis method, in which titanium or niobium is used as a substrate metal; freshwater or seawater is electrolyzed by an anode that is coated to have a thickness of 0.1-30 $\mu$m with ruthenium, iridium, tantalum, platinum, or an oxidant thereof; and a voltage between 2.51 and 4.4 V is applied to the electrolysis method such that bromate is generated with a concentration of 10 ppb or less;
a sterilization part (300) including a farming water movement chamber that lets the oxidant remaining in the farming water, whereas the farming water containing the oxidant is supplied and moved, and sterilizes fish-harming germs in the farming water;
a neutralization part (400) composed of a neutralizer input part in which a neutralizer is input, whereas the sterilized farming water is moved, and a farming water movement chamber that neutralizes the residual oxidant in the farming water until their concentration becomes 0.06 ppm or less while the farming water in which one or more neutralizers selected from thiosulfate inorganic bases, sodium dithionite, ascorbic acid, sodium ascorbic acid, cysteine, sulfite gas, sodium sulfite, sodium meta-bisulfite, potassium meta-bisulfite, acid sodium sulfite, and peroxide are input continuously during moving;
a sterile farming water supply part (600) that supplies the sterilized and neutralized farming water to a fish farming water tank (500); and
an aquaculture wastewater discharge part (700) that discharges aquaculture wastewater from the fish farming water tank.

10. The flowing water-type sterile water aquaculture system as in Claim 9,
wherein one or more metals selected from a group consisting of zinc, iron, copper, chromium, tin, or the ions thereof are additionally input in the neutralization part.

11. The flowing water-type sterile water aquaculture system as in Claim 9,
wherein the neutralization part (400) includes one or more reaction-improving devices selected from a group consisting of a blower, compressor, mixer, and circulating pump.

12. The flowing water-type sterile water aquaculture method as in Claim 1,
wherein the oxidant is generated from ozone.

## Patentansprüche

1. Ein Fließwasser-Typ-Steriles-Wasser-Aquakulturverfahren, welches die folgenden Schritte aufweist:

(a) einen Zuchtwasser-Versorgungsschritt zum Sammeln von Süßwasser oder Salzwasser und zum Bereitstellen des Wassers als Zuchtwasser;
(b) einen Oxidationsmittel-Erzeugungsschritt zum Erzeugen eines Oxidationsmittels in dem bereitgestellten Zuchtwasser durch ein Elektrolyseverfahren, bei dem Titan oder Niob als Substratmetall verwendet werden, wobei das Süßwasser oder Salzwasser durch eine Anode elektrolysiert wird, welche beschichtet ist, um eine Dicke von 0,1 - 30 $\mu$m zu haben, mit Ruthenium, Iridium, Tantal, Platin oder einem Oxidationsmittel davon, und wobei eine Spannung zwischen 2,51 V und 4,4 V an das Elektrolyseverfahren angelegt wird, sodass Bromat mit einer Konzentration von 10 ppb oder weniger erzeugt wird;
(c) einen Sterilisierungsschritt, bei dem das Oxidationsmittel in dem kontinuierlich fließenden Zuchtwasser belassen wird und bei dem fischschädigende Keime in dem Zuchtwasser sterilisiert werden;

(d) einen Neutralisierungsschritt, bei dem ein Neutralisierungsmittel dem kontinuierlich fließenden Zuchtwasser zugeführt wird und das Oxidationsmittel reduziert wird, sodass die Konzentration des Rest-Oxidationsmittels in dem Zuchtwasser 0,06 ppm oder weniger erreicht;

(e) einen Steriles-Zuchtwasser-Versorgungsschritt zum Bereitstellen des sterilisierten und neutralisierten Zuchtwassers an einen Fischzucht-Wassertank; und

(f) einen Aquakultur-Abwasser-Ableitungsschritt zum Ableiten von Abwasser aus dem Fischzucht-Wassertank,

wobei die Schritte (c) und (d) in zweifach- bis achtfach unterteilten Kammern (310, 320, 430, 440, 450, 460, 470, 480) durchgeführt werden, wobei das Zuchtwasser in die unterteilten Kammern geleitet oder gepumpt wird, in eine Richtung fließt und nacheinander dem Sterilisierungsschritt (c) und dem Neutralisierungsschritt (d) in den unterteilten Kammern unterzogen wird, und

wobei die Kammern (310, 320, 430, 440, 450, 460, 470, 480) eine Struktur haben, in der Zuchtwasser durch abwechselnd angeordnete Trennwände kontinuierlich nach unten und oben fließt, wobei ein unterer Teil einer Trennwand in einer gegebenen Höhe offen ist und ein oberer Teil der nächsten Trennwand in einer gegebenen Höhe abgesenkt ist und diese Anordnung einige Male wiederholt wird, sodass das Zuchtwasser über den oberen Teil einer Trennwand zu dem unteren Teil der nächsten Trennwand fließt, durch den unteren Teil der Trennwand zu dem oberen Teil der nächsten Trennwand fließt und über den oberen Teil der Trennwand zu dem unteren Teil der nächsten Trennwand fließt.

2. Das Fließwasser-Typ-Steriles-Wasser-Aquakulturverfahren gemäß Anspruch 1,
   wobei der Wert des gesamten Oxidationsmittelrestes in Schritt (c) 0,1 - 7,0 ppm ist.

3. Das Fließwasser-Typ-Steriles-Wasser-Aquakulturverfahren gemäß Anspruch 1,
   wobei das Sterilisieren in Schritt (c) durch eine Reaktion von 1 - 28 Min. durchgeführt wird.

4. Das Fließwasser-Typ-Steriles-Wasser-Aquakulturverfahren gemäß Anspruch 1,
   wobei der Schritt (d) einen zusätzlichen Schritt aufweist zum Beschleunigen des Entfernens des Oxidationsmittels durch ein Zuführen eines Übergangsmetalls, eines Metalls, welches zu der Gruppe I VA gehört oder von einem oder mehreren der Ionen davon als ein Neutralisierungsbeschleuniger.

5. Das Fließwasser-Typ-Steriles-Wasser-Aquakulturverfahren gemäß Anspruch 1,
   wobei Schritt (d) einen zusätzlichen Schritt aufweist zum Beschleunigen des Entfernens des Oxidationsmittels durch ein Zuführen von einem oder mehreren Metallen, die ausgewählt sind aus einer Gruppe bestehend aus Zink, Eisen, Kupfer, Chrom, Zinn oder den Ionen davon, und einen zusätzlichen Belüftungsschritt zum Entfernen des Oxidationsmittels durch Einblasen von Luft.

6. Das Fließwasser-Typ-Steriles-Wasser-Aquakulturverfahren gemäß Anspruch 1,
   wobei die Sterilisierung in Schritt (d) für 1 - 48 Min. durchgeführt wird.

7. Das Fließwasser-Typ-Steriles-Wasser-Aquakulturverfahren gemäß Anspruch 1,
   wobei Schritt (c) unmittelbar nach dem Sterilisieren durch das mit dem Zuchtwasser in Kontakt kommende Oxidationsmittel ausgeführt wird, und das Zuführen des Neutralisierungsmittels kontinuierlich erfolgt, um den Schritt (d) auszuführen.

8. Das Fließwasser-Typ-Steriles-Wasser-Aquakulturverfahren gemäß Anspruch 1,
   wobei ein oder mehrere Neutralisierungsmittel verwendet werden, ausgewählt aus Thiosulfat-Anorganischen-Basen, Natriumdithionit, Ascorbinsäure, Natriumascorbinsäure, Cystein, Sulfidgas, Natriumsulfid, Natriummetabisulfid, Kaliummetabisulfid, saurem Natriumsulfid und Peroxid.

9. Ein Fließwasser-Typ-Steriles-Aquakultur-System, das Folgendes aufweist:

   einen Zuchtwasser-Versorgungsteil (100), welcher Süß- oder Salzwasser sammelt und es als Zuchtwasser bereitstellt;
   einen Oxidationsmittel-Erzeugungsteil (200), welcher in dem bereitgestellten Zuchtwasser durch ein Elektrolyseverfahren, bei dem Titan und Niob als ein Substratmetall verwendet werden, Oxidationsmittel erzeugt, wobei das Süß- oder Salzwasser durch eine Anode elektrolysiert wird, welche beschichtet ist, um eine Dicke von 0,1 - 30 $\mu$m zu haben, mit Ruthenium, Iridium, Tantal, Platin oder einem Oxidationsmittel davon, und wobei eine Spannung zwischen 2,51 V und 4,4 V an das Elektrolyseverfahren angelegt wird, sodass Bromat mit einer Konzentration von 10 ppb oder weniger erzeugt wird;

einen Sterilisierungsteil (300), welcher eine Zuchtwasser-Bewegungskammer aufweist, die das Oxidationsmittel in dem Zuchtwasser belässt, wobei das Zuchtwasser, welches das Oxidationsmittel enthält, bereitgestellt und bewegt wird und fischschädigende Keime in dem Zuchtwasser sterilisiert;

einen Neutralisierungsteil (400), welcher zusammengesetzt ist aus einem Neutralisierungsmittel-Zuführabschnitt, in dem ein Neutralisierungsmittel zugeführt wird, wobei das sterilisierte Zuchtwasser bewegt wird, und einer Zuchtwasser-Bewegungskammer, welche das Rest-Oxidationsmittel in dem Zuchtwasser neutralisiert, bis seine Konzentration 0,06 ppm oder weniger erreicht hat, während das Zuchtwasser, welchem ein oder mehrere Neutralisierungsmittel, ausgewählt aus Thiosulfat-Anorganischen-Basen, Natriumdithionit, Ascorbinsäure, Natriumascorbinsäure, Cystein, Sulfidgas, Natriumsulfid, Natriummetabisulfid, Kaliummetabisulfid, saurem Natriumsulfid und Peroxid, während der Bewegung kontinuierlich zugeführt wird;

einen Steriles-Zuchtwasser-Versorgungsteil (600), welcher einen Fischzucht-Wassertank (500) mit dem sterilisierten und neutralisierten Zuchtwasser versorgt; und

einen Aquakultur-Abwasser-Ableitteil (700), welcher Aquakultur-Abwasser aus dem Fischzucht-Wassertank ableitet.

10. Das Fließwasser-Typ-Steriles-Aquakultur-System gemäß Anspruch 9, wobei ein oder mehrere Metalle, ausgewählt aus einer Gruppe bestehend aus Zink, Eisen, Kupfer, Chrom, Zinn oder den Ionen davon, zusätzlich in den Neutralisierungsteil eingeführt werden.

11. Das Fließwasser-Typ-Steriles-Aquakultur-System gemäß Anspruch 9, wobei der Neutralisierungsteil (400) eine oder mehrere reaktionsverbessernde Vorrichtungen, ausgewählt aus einer Gruppe bestehend aus einem Gebläse, Kompressor, Mixer und einer Umwälzpumpe, aufweist.

12. Das Fließwasser-Typ-Steriles-Aquakultur-Verfahren gemäß Anspruch 1, wobei das Oxidationsmittel aus Ozon erzeugt wird.

## Revendications

1. Procédé d'aquaculture à l'aide d'eau stérile s'écoulant comprenant les étapes suivantes :

(a) une étape de fourniture d'eau d'élevage pour recueillir de l'eau douce ou de l'eau de mer et la fournir en tant qu'eau d'élevage ;

(b) une étape de génération d'oxydant pour générer un oxydant dans l'eau d'élevage fournie par le procédé d'électrolyse, dans laquelle du titane ou du niobium est utilisé en tant que métal de substrat ; de l'eau douce ou de l'eau de mer est électrolysée par une anode qui est revêtue pour avoir une épaisseur de 0,1 à 30 $\mu$m avec du ruthénium, de l'iridium, du tantale, du platine, ou un oxydant de ceux-ci ; et une tension entre 2,51 et 4,4 V est appliquée au procédé d'électrolyse de manière à ce que du bromate soit généré à une concentration de 10 ppb ou moins ;

(c) une étape de stérilisation pour laisser l'oxydant rester dans l'eau d'élevage s'écoulant en continu et pour stériliser les germes nuisibles pour les poissons dans l'eau d'élevage ;

(d) une étape de neutralisation dans laquelle un agent de neutralisation est introduit dans l'eau d'élevage s'écoulant en continu stérilisée, et l'oxydant est réduit de manière à ce que la concentration de l'oxydant résiduel dans l'eau d'élevage devienne 0,06 ppm ou moins ;

(e) une étape de fourniture d'eau d'élevage stérile pour fournir l'eau d'élevage stérilisée et neutralisée à une cuve d'eau d'élevage de poissons ; et

(f) une étape d'évacuation des eaux usées d'aquaculture pour évacuer les eaux usées de la cuve d'eau d'élevage de poissons,

dans lequel les étapes (c) et (d) sont réalisées dans deux à huit chambres compartimentées (310, 320, 430, 440, 450, 460, 470, 480), tandis que l'eau d'élevage est amenée ou pompée dans les chambres compartimentées, s'écoule dans une direction, et subit successivement l'étape de stérilisation (c) et l'étape de neutralisation (d) dans les chambres compartimentées, et

dans lequel les chambres (310, 320, 430, 440, 450, 460, 470, 480) ont une structure dans laquelle l'eau d'élevage s'écoule en continu vers le haut et le bas à travers des cloisons placées de manière alternée, dans lequel une partie inférieure d'une cloison est ouverte sur une hauteur donnée et une partie supérieure de la cloison suivante est abaissée sur une hauteur donnée, et une telle disposition est répétée à plusieurs reprises, de manière à ce que l'eau d'élevage s'écoule sur la partie supérieure d'une cloison jusqu'à la partie inférieure de la cloison suivante, s'écoule à travers la partie inférieure de la cloison jusqu'à la partie supérieure de la cloison suivante, et s'écoule sur la partie supérieure de la cloison jusqu'à la partie inférieure de la cloison suivante.

2. Procédé d'aquaculture à l'aide d'eau stérile s'écoulant selon la revendication 1, dans lequel la valeur de l'oxydant résiduel total dans l'étape (c) est de 0,1 à 7,0 ppm.

3. Procédé d'aquaculture à l'aide d'eau stérile s'écoulant selon la revendication 1, dans lequel la stérilisation de l'étape (c) est réalisée par une réaction pendant 1 à 28 min.

4. Procédé d'aquaculture à l'aide d'eau stérile s'écoulant selon la revendication 1, dans lequel l'étape (d) comprend une étape additionnelle pour accélérer l'élimination de l'oxydant en introduisant un métal de transition, un métal appartenant au groupe IVA, ou un ou plusieurs des ions de ceux-ci en tant qu'agent accélérant la neutralisation.

5. Procédé d'aquaculture à l'aide d'eau stérile s'écoulant selon la revendication 1, dans lequel l'étape (d) comprend une étape additionnelle pour accélérer l'élimination de l'oxydant en introduisant un ou plusieurs métaux choisis dans un groupe constitué du zinc, du fer, du cuivre, du chrome, de l'étain ou des ions de ceux-ci, et une étape d'aération additionnelle pour éliminer l'oxydant en insufflant de l'air.

6. Procédé d'aquaculture à l'aide d'eau stérile s'écoulant selon la revendication 1, dans lequel la stérilisation de l'étape (d) est réalisée pendant 1 à 48 min.

7. Procédé d'aquaculture à l'aide d'eau stérile s'écoulant selon la revendication 1, dans lequel l'étape (c) est réalisée immédiatement après que la stérilisation a été effectuée par l'oxydant entrant en contact avec l'eau d'élevage, et l'introduction d'agents de neutralisation est effectuée en continu pour réaliser l'étape (d).

8. Procédé d'aquaculture à l'aide d'eau stérile s'écoulant selon la revendication 1, dans lequel un ou plusieurs agents de neutralisation choisis parmi les bases inorganiques de thiosulfate, le dithionite de sodium, l'acide ascorbique, l'acide ascorbique sodique, la cystéine, le sulfite gazeux, le sulfite de sodium, le méta-bisulfite de sodium, le méta-bisulfite de potassium, le sulfite de sodium acide et le peroxyde sont utilisés.

9. Système d'aquaculture à l'aide d'eau stérile s'écoulant comprenant les éléments suivants :

une partie fourniture d'eau d'élevage (100) qui recueille de l'eau douce ou de l'eau de mer et la fournit en tant qu'eau d'élevage ;
une partie génération d'oxydant (200) qui génère des oxydants dans l'eau d'élevage fournie par un procédé d'électrolyse, dans laquelle du titane ou du niobium est utilisé en tant que métal de substrat ; de l'eau douce ou de l'eau de mer est électrolysée par une anode qui est revêtue pour avoir une épaisseur de 0,1 à 30 $\mu$m avec du ruthénium, de l'iridium, du tantale, du platine, ou un oxydant de ceux-ci ; et une tension entre 2,51 et 4,4 V est appliquée au procédé d'électrolyse de manière à ce que du bromate soit généré à une concentration de 10 ppb ou moins ;
une partie stérilisation (300) incluant une chambre de mouvement d'eau d'élevage qui laisse l'oxydant restant dans l'eau d'élevage, tandis que l'eau d'élevage contenant l'oxydant est fournie et déplacée, et stérilise les germes nuisibles pour les poissons dans l'eau d'élevage ;
une partie neutralisation (400) composée d'une partie introduction d'agent de neutralisation dans laquelle un agent de neutralisation est introduit, tandis que l'eau d'élevage stérilisée est déplacée, et une chambre de mouvement d'eau d'élevage qui neutralise l'oxydant résiduel dans l'eau d'élevage jusqu'à ce que leur concentration devienne 0,06 ppm ou moins tandis que l'eau d'élevage dans laquelle un ou plusieurs agents de neutralisation choisis parmi les bases inorganiques de thiosulfate, le dithionite de sodium, l'acide ascorbique, l'acide ascorbique sodique, la cystéine, le sulfite gazeux, le sulfite de sodium, le méta-bisulfite de sodium, le méta-bisulfite de potassium, le sulfite de sodium acide et le peroxyde sont introduits en continu durant le déplacement ;
une partie fourniture d'eau d'élevage stérile (600) qui fournit l'eau d'élevage stérilisée et neutralisée à une cuve d'eau d'élevage de poissons (500) ; et
une partie évacuation d'eaux usées d'aquaculture (700) qui évacue les eaux usées d'aquaculture de la cuve d'eau d'élevage de poissons.

10. Système d'aquaculture à l'aide d'eau stérile s'écoulant selon la revendication 9, dans lequel un ou plusieurs métaux choisis dans un groupe constitué du zinc, du fer, du cuivre, du chrome, de l'étain ou des ions de ceux-ci sont en outre introduits dans la partie neutralisation.

**11.** Système d'aquaculture à l'aide d'eau stérile s'écoulant selon la revendication 9, dans lequel la partie neutralisation (400) inclut un ou plusieurs dispositifs améliorant la réaction choisis dans un groupe constitué d'une soufflante, d'un compresseur, d'un mélangeur et d'une pompe de circulation.

**12.** Procédé d'aquaculture à l'aide d'eau stérile s'écoulant selon la revendication 1, dans lequel l'oxydant est généré à partir d'ozone.

[Fig. 1]

| Farming water supply step (a) | → | Oxidant generation step (b) | → | Sterilization step (c) | Neutralization step (d) | → | Sterile farming water supply step (e) | → | Aquaculture wastewater discharge step (f) |

[Fig. 2]

[Fig. 3a]

A-part cross-section    B-part cross-section    C-part cross-section

[Fig. 3b]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101264260
- KR 200419772
- KR 201059089
- KR 101064911
- JP 2003190954 A
- JP 2003275770 A
- KR 1264260

**Non-patent literature cited in the description**

- *SUISANZOSHOKU,* 1996, vol. 44 (4), 457-463
- *SUISANZOSHOKU,* 2001, vol. 49 (2), 237-241
- *Nippon Suisan Gakkaishi,* 2001, vol. 67 (2), 222-225
- *Korean Journal of Fisheries and Aquatic Sciences,* 2013, vol. 46 (5), 534-539
- *SUISANZOSHOKU,* 2001, vol. 49 (2), 237-241
- *Nippon Suisan Gakkaishi,* 2001, vol. 67 (2), 222-225
- *SUISANZOSHOKU,* 1996, vol. 44 (4), 457-463
- *Fisheries and Aquatic Science bulletin,* 2013, vol. 46 (5), 534-539
- *Aquaculture,* 2007, vol. 264, 119-129
- *Journal of Environmental Protection,* 2010, vol. 1, 456-465
- *Journal of the Korean Society for Marine Environment and Energy,* May 2013, vol. 16 (2), 88-101